# EUROPEAN PATENT SPECIFICATION

(11) **EP 3 557 416 B1**
(45) Date of publication and mention of the grant of the patent: **06.07.2022**
(21) Application number: 19176882.9
(22) Date of filing: 06.02.2014
(51) Int. Cl.: G06F 9/451

(54) **METHOD AND DEVICE FOR PROVIDING RECOMMENDATION PANEL, AND METHOD AND SERVER FOR PROVIDING RECOMMENDATION ITEM**
VERFAHREN UND VORRICHTUNG ZUR BEREITSTELLUNG EINER EMPFEHLUNGSTAFEL UND VERFAHREN UND SERVER ZUR BEREITSTELLUNG EINES EMPFEHLUNGSELEMENTS
PROCÉDÉ ET DISPOSITIF POUR FOURNIR UN PANNEAU DE RECOMMANDATION ET PROCÉDÉ ET SERVEUR POUR FOURNIR UN ARTICLE DE RECOMMANDATION

(30) Priority: 08.02.2013 KR 20130014653; 28.08.2013 KR 20130102663
(43) Date of publication of application: 23.10.2019
(62) Divisional of application: 14154177.1
(73) Proprietor: Samsung Electronics Co., Ltd., Gyeonggi-do 16677 (KR)
(72) Inventor: CHOI, Won-young, 16677 Suwon-si, (KR); KANG, Nam-wook, 16677 Suwon-si, (KR); RYU, Jong-hyun, 16677 Suwon-si, (KR); JEON, Hee-chul, 16677 Suwon-si, (KR); CHA, Sang-ok, 16677 Suwon-si, (KR)
(74) Representative: HGF

(56) References cited:
- US-A1- 2007 288 543
- US-A1- 2009 319 462
- US-A1- 2012 135 684

## Description

### BACKGROUND

### 1. Field

One or more exemplary embodiments relate to a method and device for providing a recommendation panel, and a method and server for providing a recommendation item. In particular, certain embodiments relate to a method and a device for providing a recommendation panel including at least one recommendation item according to each type of a device and a method and system for providing a recommendation panel including the recommendation item according to each type of device.

### 2. Description of the Related Art

With the diversification of electronic devices, types of electronic devices that each individual person possesses have also become diversified. Users consume various services, applications, and content by using their electronic devices. Content available to users has also been increasing.

Although users may encounter numerous types of content, users frequently encounter meaningless content, which may cause an increase in user fatigue.

Thus, there is demand for a system that efficiently recommends meaningful content and applications to users according to the devices that they possess.

US 2009/319462 A1 relates to a method and system for customization of a GUI of a communication device in a communication network.

US 2012/135684 A1 relates to systems and method for customizing broadband content based upon passive presence detection of users.

US 2007/288543 A1 relates to a system and method for modifying a profile of a user device.

### SUMMARY

The invention is laid down in the independent claims of appended set of claims. Embodiments are set forth in the thereupon dependent claims.

### BRIEF DESCRIPTION OF THE DRAWINGS

These and/or other aspects will become apparent and more readily appreciated from the following description of the exemplary embodiments, taken in conjunction with the accompanying drawings in which:
FIG. 1 is a block diagram of an item recommendation system according to an exemplary embodiment;
FIGS. 2A, 2B, and 2C illustrate examples of recommendation items provided according to types of devices;
FIG. 3 is a flowchart of a method in which a server monitors information regarding an item used in a device according to an exemplary embodiment;
FIG. 4 is a flowchart of a method of uploading information regarding an item that is being used in a device to a server according to an exemplary embodiment;
FIG. 5 is a flowchart of a method in which a device transmits information regarding an item that is being used to a server through a user gesture according to an exemplary embodiment;
FIG. 6 illustrates an example of a collection request gesture of a user according to an exemplary embodiment;
FIG. 7 is a table for explaining information regarding items collected by a plurality of devices of a user according to an exemplary embodiment;
FIGS. 8A, 8B, and 8C are diagrams for explaining a method in which a device generates thumbnail images of items according to an exemplary embodiment;
FIG. 9 is a flowchart of a recommendation panel providing method according to an exemplary embodiment;
FIGS. 10A and 10B illustrate a recommendation panel according to an exemplary embodiment;
FIGS. 11A and 11B illustrate recommendation panels including different recommendation items for each device according to an exemplary embodiment;
FIG. 12 is a flowchart of a recommendation item providing method according to an exemplary embodiment;
FIGS. 13A and 13B are diagrams for explaining a method of reproducing/executing a recommendation item according to an exemplary embodiment;
FIG. 14 is a flowchart of a recommendation item providing method based on a recommendation condition of a user according to an exemplary embodiment;
FIG. 15 illustrates a setting window used to input a recommendation condition according to an exemplary embodiment;
FIGS. 16A and 16B illustrate recommendation item lists according to an exemplary embodiment;
FIGS. 17A and 17B illustrate recommendation item lists corresponding to recommendation conditions according to an exemplary embodiment;
FIG. 18 is a diagram for explaining a method of transmitting recommendation items to an external device according to an exemplary embodiment;
FIG. 19 illustrates screens that provide recommendation items selected based on context information according to an exemplary embodiment;
FIG. 20 illustrates screens that provide recommendation items selected based on context information according to another exemplary embodiment;
FIGS. 21A and 21B are block diagrams of a device according to various exemplary embodiments; and
FIG. 22 is a block diagram of a server according to an exemplary embodiment.

### DETAILED DESCRIPTION OF EXEMPLARY EMBODIMENTS

All terms including descriptive or technical terms which are used herein should be construed as having their plain and ordinary meanings. However, the terms may have different meanings according to an intention of one of ordinary skill in the art, precedent cases, or the appearance of new technologies. Also, some terms may be arbitrarily selected by the applicant, and in this case, the meaning of the selected terms will be described in detail in the detailed description. Thus, the terms used herein have to be defined based on the meaning of the terms together with the description throughout the specification.

Also, when a part "includes" or "comprises" an element, unless there is a particular description contrary thereto, the part may further include other elements, not excluding the other elements: thus the words "comprise" and "contain" and variations of the words, for example "comprising" and "comprises", mean "including but not limited to", and are not intended to (and do not) exclude other components, integers or steps. In the following description, terms such as "unit" and "module" indicate a unit for processing at least one function or operation, wherein the unit and the block may be embodied as hardware or software or may be embodied by combining hardware and software.

Throughout the specification, the term "first screen" means a screen that first displays on a device when the device is turned on, the device is unlocked, or an operation mode of the device is switched from a standby mode to an active mode. In one or more exemplary embodiments, the first screen may be, but is not limited to, a home screen of the device, a menu screen of the device, or a background screen of the device. In one or more embodiments, the first screen may be a gateway for the device to provide a service. For example, the device may provide a recommended service via the first screen.

One or more exemplary embodiments will now be described more fully with reference to the accompanying drawings. However, the one or more exemplary embodiments may be embodied in many different forms, and should not be construed as being limited to the exemplary embodiments set forth herein. Rather, these exemplary embodiments are provided so that this disclosure will be thorough and complete, and will fully convey the concept of the one or more exemplary embodiments to those of ordinary skill in the art. In the following description, well-known functions or constructions are not described in detail since they would obscure the one or more exemplar embodiments with unnecessary detail, and like reference numerals in the drawings denote like or similar elements throughout the specification.

As used herein, the term "and/or" includes any and all combinations of one or more of the associated listed items. Expressions such as "at least one of," when preceding a list of elements, modify the entire list of elements and do not modify the individual elements of the list.

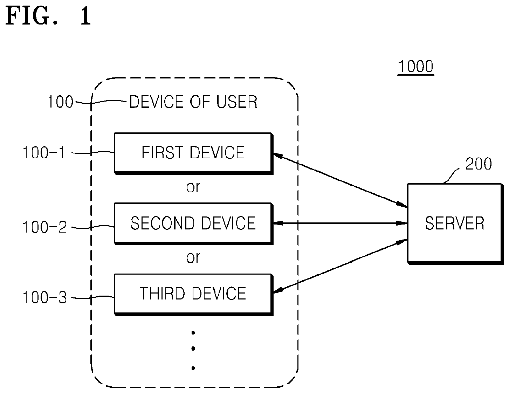

FIG. 1 is a block diagram of an item recommendation system 1000 according to an exemplary embodiment.

As illustrated in FIG. 1, the item recommendation system 1000 may include a device 100 and a server 200. However, these elements are not all essential. The item recommendation system 1000 may be implemented with more or less elements than the elements of FIG. 1.

A user may own a plurality of devices (for example, a first device 100-1, a second device 100-2, a third device 100-3, ...) The devices (for example, the first device 100-1, the second device 100-2, the third device 100-3, ...) that the user owns may be the same type of devices or different types of devices.

According to an exemplary embodiment, each of the devices (for example, the first device 100-1, the second device 100-2, the third device 100-3, ...) of the user may be connected to the server 200 by using the same user account. Thus, the server 200 may recognize that the devices 100-1, 100-2, 100-3, ... are devices of the same user by authenticating account information received from the devices 100-1, 100-2, 100-3, etc. That is, identification information of each of the devices 100-1, 100-2, 100-3, ... may be connected to the same user account.

Hereinafter, unless otherwise specially mentioned, a device that requests a recommendation item from the server 200 among the devices 100-1, 100-2, 100-3, ... of the user is defined as the "device 100" according to an exemplary embodiment. That is, the device 100 may be one of the first device 100-1, the second device 100-2, the third device 100-3, etc.

The device 100 according to an exemplary embodiment may be implemented in various forms. For example, the device 100 described in the specification may include a desktop computer, a cellular phone, a smart phone, a laptop computer, a tablet personal computer (PC), an e-book terminal, a digital broadcasting terminal, a personal digital assistant (PDA), a portable multimedia player (PMP), a navigation device, an MP3 player, a digital camera, an Internet protocol TV (IPTV), a digital TV (DTV), a consumer electronics (CE) device (for example, a refrigerator or an air conditioner having a display panel), etc. but is not limited thereto. The device 100 described in the specification may be a wearable device that the user may wear. For example, the device 100 according to an exemplary embodiment may be a wristwatch, glasses, a ring, a bracelet, a necklace, or the like.

The device 100 according to an exemplary embodiment may detect a user input (for example, a recommendation panel request gesture) and display a recommendation panel including the recommendation item received from the server 200 on a predetermined screen. In this regard, the recommendation item means an item that is recommended to the user through the device 100. For example, the recommendation item may include an application, a moving image, a still image, a text file, a web page, etc.

The recommendation item according to an exemplary embodiment may be configured as link information or index information connected to an image of the recommendation item. The recommendation item may be configured as an object for using a service.

The "object for using the service" in the specification means a user interface for using a service of a service provider. The object for using the service may be a user interface for using a service provided from a server or a content provider. The object for using the service may include, for example, a user interface including an icon, text, an image, and link information and a description of a function of the object.

The device 100 according to an exemplary embodiment may receive the object from the server 200 and use the service of the service provider by using the received object. For example, the device 100 may obtain and process content from an application program of the device 100, a data source, the server 200, or the content provider by using the object. The object may be a user interface packaged with predetermined services provided based on context information of a user (or a device).

According to an exemplary embodiment, the object may not be installed in or executed by the device 100 and may be operated or called by a host program (or a resident program) of the device 100 so that the object may be displayed on a screen of the device 100 and may be used by the user. The object may be, for example, a widget, but is not limited thereto.

The recommendation item according to an exemplary embodiment may be referred to as a queue or a universal queue (UQ) according to circumstances.

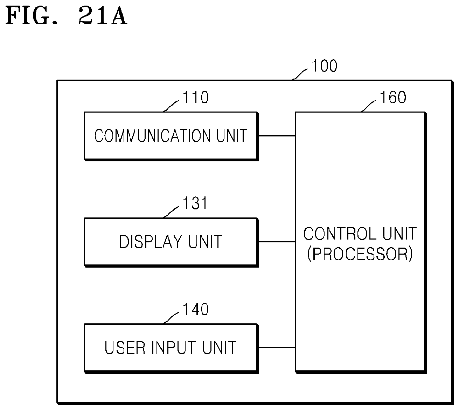

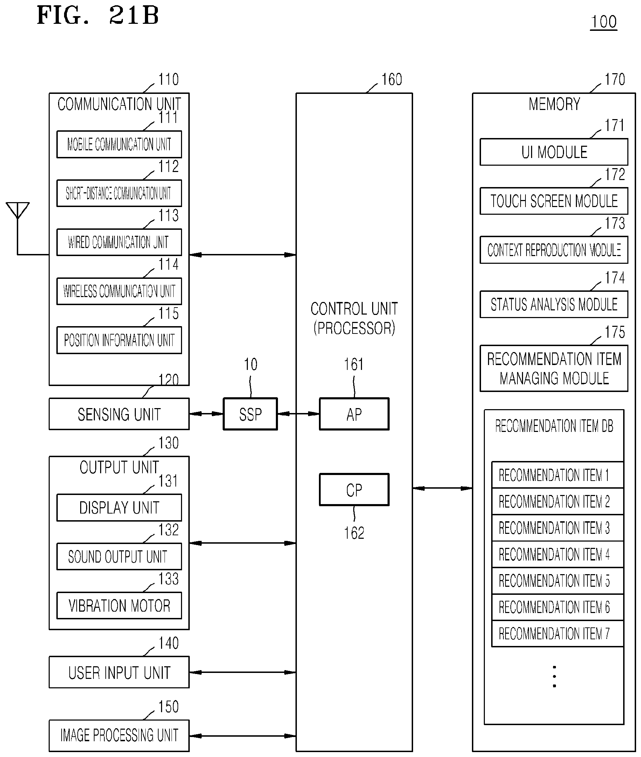

A seamless sensing platform (SSP) may operate in the device 100 according to an exemplary embodiment, separately from an application processor (AP). The device 100 according to an exemplary embodiment may collect sensing information and recognize a situation by connecting sensors to a sensor hub of the SSP without awakening the AP from a sleep mode. The sensor hub (a kind of micro control unit (MCU)) of the SSP awakens the AP from the sleep mode when a predetermined situation takes place. The SSP and the AP according to an exemplary embodiment may be implemented as hardware, software, or a combination of the hardware and the software. The SSP will be described in more detail with reference to FIG. 21 later.

The server 200 according to an exemplary embodiment may be a server that provides the recommendation item displayed on the recommendation panel of the device 100.

The server 200 according to an exemplary embodiment may respectively receive information regarding items that are being used in the devices (for example, the first device 100-1, the second device 100-2, the third device 100-3, ...) of the user from the devices (for example, the first device 100-1, the second device 100-2, the third device 100-3, ...) of the user. In this regard, the server 200 may receive the information regarding the items that are being used in the devices at a predetermined interval or when a specific event occurs in each of the devices.

An item according to an exemplary embodiment may be content, an application, a service, etc. that are used in each of the devices 100-1, 100-2, 100-3, ... of the user. "Using the item" according to an exemplary embodiment may be construed as executing the item, reproducing the item, displaying the item, etc., but is not limited thereto.

Content according to an exemplary embodiment may include a still image, a moving image, text, a web page, etc., but is not limited thereto. For example, the content may include education content, movie content, broadcasting content, game content, advertisement content, photo content, news content, etc.

An application according to an exemplary embodiment is a computer program set devised to perform a specific task. The application described in the specification may vary. For example, the application may include a game application, a musical instrument play application, a moving image reproduction application, a map application, a broadcasting application, an exercise support application, a payment application, etc. but is not limited thereto.

A "service" according to an exemplary embodiment may vary such as a service provided through the application, a service provided through a widget, a service provided through the AP, etc. For example, the service according to an exemplary embodiment may include a social networking service, a financial payment service, a search service, a multitasking service, etc., but is not limited thereto.

The server 200 according to an exemplary embodiment may communicate with the device 100. For example, the server 200 may receive a recommendation item request from the device 100 and transmit the recommendation item according to the type of the device 100 to the device 100.

The server 200 according to an exemplary embodiment may include an intelligence engine so that the server 200 may analyze event information collected by the device 100 or information regarding the item through the intelligence engine. For example, the server 200 may analyze the event information to infer a user status or a device situation, etc., and analyze metadata of the item, the context information, etc. to obtain item use pattern information for each device.

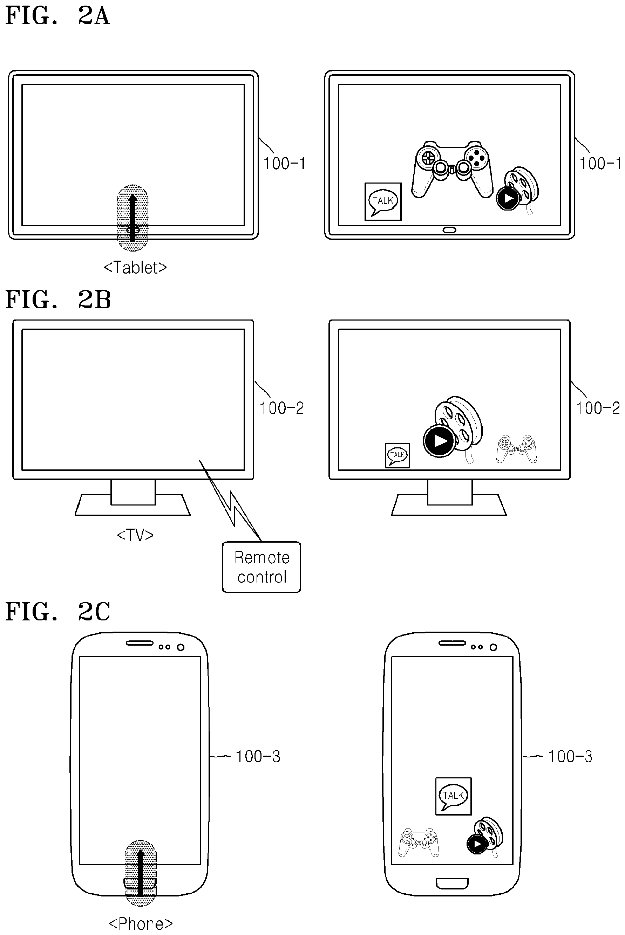

Therefore, the server 200 according to an exemplary embodiment may provide the device 100 with an item that is expected to be of high interest to the user as the recommendation item in consideration of at least one of hardware information of the device 100, software information, item use pattern information of the device 100, a user status, and a recommendation item request time. This will now be described with reference to FIG. 2.

FIGS. 2A, 2B, and 2C illustrate examples of recommendation items provided according to types of the first device 100-1, the second device 100-2, and the third device 100-3.

The examples in which the first device 100-1 is a tablet PC, the second device 100-2 is an IPTV, and the third device 100-3 is a mobile phone as shown in FIGS. 2A, 2B, and 2C are described. In this regard, the first device 100-1, the second device 100-2, and the third device 100-3 may be devices connected to an account (for example, ABC) of the same user. That is, the first device 100-1, the second device 100-2, and the third device 100-3 may be devices that the same user possesses.

Referring to FIG. 2A, when the first device 100-1 detects a user gesture that involves dragging or flicking a predetermined region of a touch screen, the first device 100-1 may request a recommendation item from the server 200 while transmitting information (for example, device type information, a device ID, account information, device address information, etc.) regarding a type of the first device 100-1 to the server 200.

In this regard, the server 200 may acknowledge that the type of the first device 100-1 which requests the recommendation item is the tablet PC and provide a game application, e-book content, etc. that have high use frequency in the tablet PC as recommendation items. In this case, the first device 100-1 may display the game application, the e-book content, etc. that are recommended by the server 200 on a recommendation panel.

The game application, the e-book content, etc. that are recommended by the server 200 may be items previously used in the first device 100-1 or may be items used in an external device (for example, the second device 100-2, the third device 100-3, and an external server).

Referring to FIG. 2B, when the second device 100-2 receives a recommendation panel request through a remote controller, the second device 100-2 may request a recommendation item from the server 200 while transmitting information (for example, device type information, a device ID, account information, device address information, etc.) regarding a type of the second device 100-2 to the server 200.

In this regard, the server 200 may acknowledge that the type of the second device 100-2 which requests the recommendation item is the IPTV and provide movie contents having high use frequency in the IPTV as recommendation items. In this case, the second device 100-2 may display the movie contents recommended by the server 200 on a recommendation panel.

The movie contents recommended by the server 200 may be items previously reproduced in the first device 100-1, the second device 100-2, or the third device 100-3.

Referring to FIG. 2C, when the third device 100-3 detects a user gesture that involves dragging, swiping, or flicking a predetermined region of a touch screen, the third device 100-3 may request a recommendation item from the server 200 while transmitting information (for example, device type information, a device ID, account information, device address information, etc.) regarding a type of the third device 100-3 to the server 200.

In this regard, the server 200 may acknowledge that the type of the third device 100-3 which requests the recommendation item is the mobile phone and provide social networking service (SNS) applications having high use frequency in the mobile phone as recommendation items. In this case, the third device 100-3 may display the SNS applications recommended by the server 200 on a recommendation panel.

The SNS applications recommended by the server 200 may be applications previously used in the third device 100-3 or may be applications previously used in the first device 100-1 or the second device 100-2.

Therefore, according to an exemplary embodiment, the user may acknowledge at least one recommendation item (content, an application, a service, etc.) that fits a corresponding device through the recommendation panel.

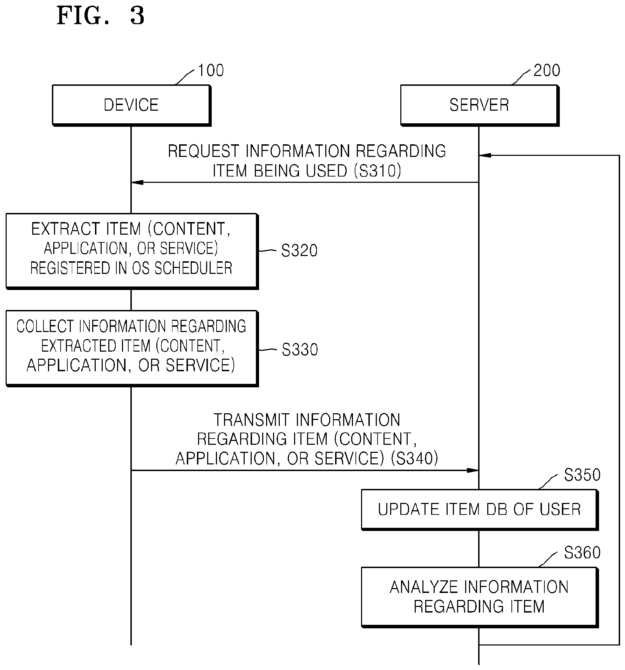

A process in which the server 200 collects and analyzes information regarding items used in the devices 100-1, 100-2, 100-3, ... of the user to provide a recommendation item will now be described with reference to FIGS. 3 through 5, and then a process in which the server 200 provides the recommendation item for each device by using the collected information regarding the items will be described.

FIG. 3 is a flowchart of a method in which the server 200 monitors information regarding an item that is being used in the device 100 according to an exemplary embodiment.

In operation S310, the server 200 may request information regarding the item (for example, content, an application, a service, etc.) that is being used in the device 100. According to an exemplary embodiment, the server 200 may request the information regarding the item from the device 100 at a predetermined interval.

In operation S320, the device 100 may extract at least one item (for example, content, an application, a service, etc.) registered in the item that is being used, i.e. an operating system (OS) scheduler.

In operation S330, the device 100 may collect information regarding the extracted item. The information regarding the item according to an exemplary embodiment may include basic attribute information of the extracted item, context information in relation to the time when the information regarding the item is collected, etc.

For example, the information regarding the item may include at least one of a name of the item, a type thereof (for example, a moving image, a still image, a web page, etc.), a time when the information regarding the item is collected, application information related to the item (for example, version information, operating step information, etc.), a component of the item, environmental information in relation to the time when the information regarding the item is collected (for example, weather, temperature, humidity, etc.), a path for collecting the information regarding the item, information regarding a device that collects the information regarding the item (for example, type information of the device, identification information of the device, etc.), and user status information in relation to the time when the information regarding the item is collected, but is not limited thereto. The device 100 according to an exemplary embodiment may obtain the information regarding the item through an AP, a web, a sensor of the device 100, etc. For example, the device 100 according to an exemplary embodiment may collect position information of the device 100, network information, user status information, etc.

The user status information, which is information regarding a movement of the user, a living pattern, etc., may include information regarding a waking status of the user, an exercising status, a driving status, a sleeping status, etc. For example, when the user connects the device 100 to a stand, a cradle or a mobile docking station at home, the device 100 may determine that the user is in the sleeping status in consideration of position information, tilt information, movement information, current time information, alarm setting information, etc. When the user connects the device 100 to a windshield holder or a mobile docking station in a car, the device 100 may determine that the user is in the driving state in consideration of position information, tilt information, movement information, etc. In particular, user status information may be an activity of the user, location of the user, etc.

The device 100 may collect information such as identification information of an application that is installed, used, and searched by the user, a type of the application, a use time of the application, a use period of the application, etc.

The device 100 may minimize power consumption due to collection of information by collecting the information regarding the item that is being used through a SSP.

In operation S340, the device 100 may transmit the information regarding the item to the server 200. The device 100 according to an exemplary embodiment may transmit the information regarding the item to the server 200 through wired and wireless communication.

In operation S350, the server 200 may update an item database (DB) of the user by using the information regarding the item received from the server 100.

In operation S360, the server 200 may analyze the information regarding the item received from the device 100. For example, the server 200 may obtain information (i.e., item use pattern information) regarding a type (for example, moving image content) of an item that the user mainly uses in the device 100 by analyzing the information regarding the item received from the device 100.

The server 200 may obtain information regarding an item (for example, horror movie content) that the user mainly uses in the device 100 in hot weather, an item (for example, e-book content) that the user mainly uses in the device 100 in cold weather, an item (for example, news content) that the user mainly uses in the device 100 when commuting (between 8-9 a.m.), an item (for example, car game content) that the user mainly uses in the device 100 at night, an item (for example, exercise checkup content) that the user mainly uses in the device 100 on weekends, etc. by analyzing the information regarding the item received from the device 100.

Although a case where the server 200 monitors an item use status of the device 100 among a plurality of devices that the user possesses is described with reference to FIG. 3 for convenience of description, according to an exemplary embodiment, the server 200 may monitor the item use status of each of the plurality of devices that the user possesses.

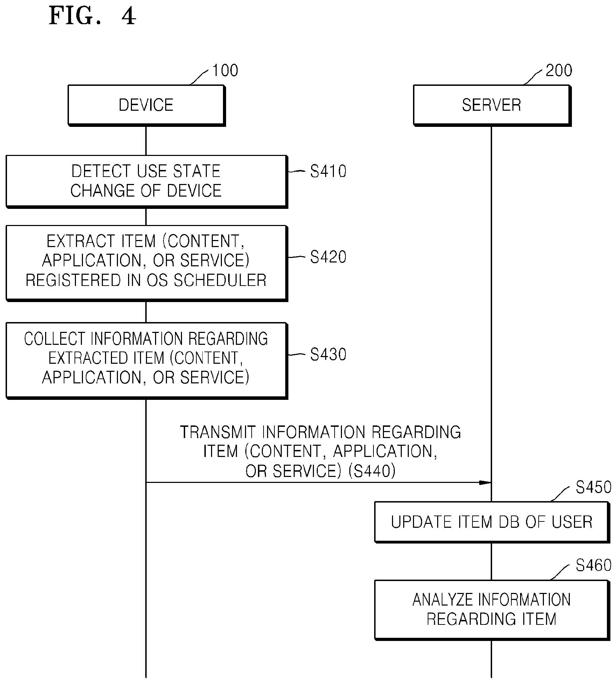

A method of uploading the information regarding the item that is being used in the device 100 to the server 200 will now be described with reference to FIG. 4.

FIG. 4 is a flowchart of a method of uploading information regarding an item that is being used in the device 100 to the server 200 according to an exemplary embodiment.

In operation S410, the device 100 may detect a use status change of the device 100 or a use status change of the item. For example, the device 100 may detect the use status change such as power on/off, execution of a predetermined application, pausing of reproduction of predetermined content, etc.

In this regard, in operation S420, the device 100 may extract an item registered in an OS scheduler. That is, the device 100 may extract content that is being used, an application, a service, content of which reproduction pauses, etc. The device 100 according to an exemplary embodiment may extract an item of which a use status change is detected from among items registered in the OS scheduler.

In operation S430, the device 100 may collect information regarding the extracted item (for example, content, an application, and a service). For example, when the item is content, the device 100 may collect a name of the content, a type of the content, application information related to the content, reproduction position information of the content, link information used to access the content, content provider information, reproduction period information of the content, etc.

When the item is the application, the device 100 may collect a name of the application, type information of the application, version information of the application, update information of the application, application provider information, reproduction period information of the application, etc.

The device 100 may collect context information of the device 100. The context information according to an exemplary embodiment may include peripheral environment information of the device 100, status information of the device 10, user status information, etc. For example, the device 100 may collect information about weather at the time when the information regarding the item is collected, temperature, humidity, date, time, position, user's feelings, an operating status of the user, a network connection status of the device 100, etc.

In operation S440, the device 100 may transmit the collected information regarding the item to the server 200.

In operation S450, the server 200 may update an item DB of the user by using the information regarding the item received from the device 100.

In operation S460, the server 200 may analyze the information regarding the item received from the device 100 by using an inference algorithm, etc.

Operations S440 through S460 correspond to operations S340 through S360 of FIG. 3, and thus detailed descriptions thereof are omitted.

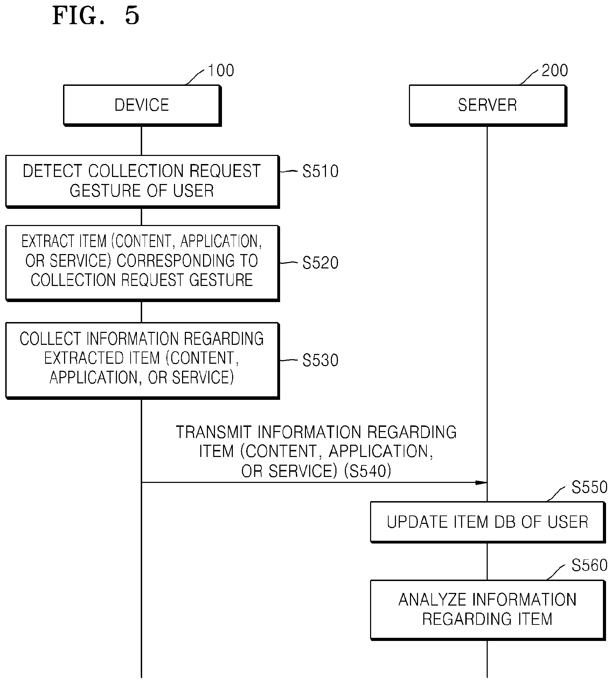

FIG. 5 is a flowchart of a method in which the device 100 transmits information regarding an item that is being used to the server 200 through a user gesture according to an exemplary embodiment.

In operation S510, the device 100 may detect a collection request gesture of the user. For example, the device 100 may detect the collection request gesture of the user with respect to at least one item displayed on a screen.

The collection request gesture according to an exemplary embodiment may vary. For example, the collection request gesture may include a touch gesture (for example, a drag gesture, a tap gesture, a flick gesture, a drag & drop gesture, a swipe gesture, etc.)

According to an exemplary embodiment, the collection request gesture of the user may include a multi-touch gesture. For example, the collection request gesture of the user may include a shrink gesture that involves pinching a plurality of fingers. According to an exemplary embodiment, the shrink gesture is a movement of at least three fingers that touch the screen of the device 100 in a direction that the at least three fingers become closer to each other.

The collection request gesture of the user according to an exemplary embodiment may include a voice input of the user. When the device 100 is a flexible display apparatus, the collection request gesture of the user may include a bending gesture that bends a predetermined region.

In operation S520, the device 100 may extract an item (for example, content, an application, a service, etc.) corresponding to the collection request gesture of the user.

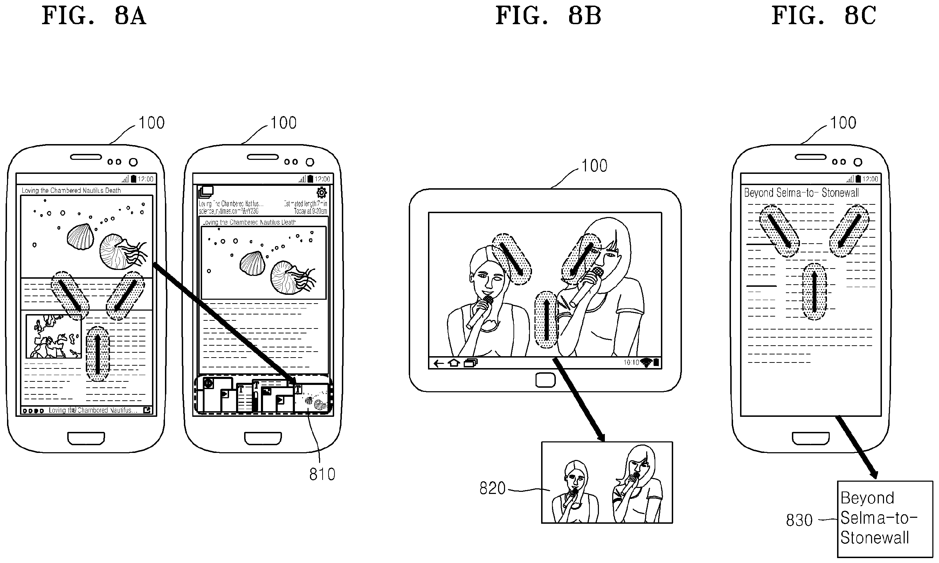

In operation S530, the device 100 may collect information regarding the item (for example, content, the application, the service, etc.) corresponding to the collection request gesture of the user. In this regard, the device 100 may generate a thumbnail image (or a preview image) regarding the item corresponding to the collection request gesture of the user. This will be described in detail with reference to FIG. 8 later.

In operation S540, the device 100 may transmit the collected information regarding the item to the server 200. The information regarding the item according to an exemplary embodiment may include basic attribute information of the item and/or context information when the information regarding the item is collected. According to an exemplary embodiment, the information regarding the item may include a thumbnail image of the item, link information (for example, a uniform resource locator (URL)), index information, etc.

In operation S550, the server 200 may update an item DB of the user by using the information regarding the item received from the device 100. Operations S540 and S550 correspond to operations S340 and S350 of FIG. 3, and thus detailed descriptions thereof are omitted.

In operation S560, the server 200 may analyze the information regarding the item received from the device 100. In this regard, the item is an item of which collection is directly requested by the user, and thus the server 200 may analyze the information regarding the item received from the device 100 and obtain an item use pattern of the user, item preference information of the user, etc.

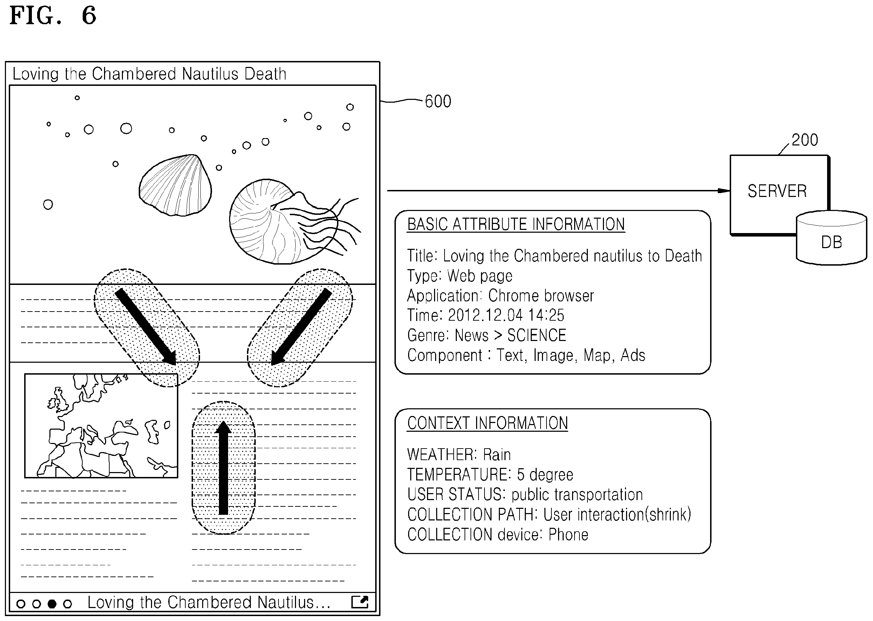

According to an exemplary embodiment, the user may simply select content, an application, a service, etc. that the user would like to receive as recommendation items later through a recommendation panel through a specific gesture. This will be described in more detail with reference to FIG. 6.

FIG. 6 illustrates an example of a collection request gesture of a user according to an exemplary embodiment.

Referring to FIG. 6, the device 100 may display a web page item 600 on a screen. In this regard, when the user views web page content and wants to collect the web page item 600, the user may request the device 100 to collect the web page item 600 displayed on the screen of the device 100 through a shrink gesture.

In this regard, the device 100 according to an exemplary embodiment may detect the shrink gesture of the user and collect information regarding the web page item 600 on which the shrink gesture is detected. For example, the device 100 may collect "title: Loving the Chambered Nautilus to Death, type: web page, application: Chrome browser, collection time: 04.12.2012 14:25, genre: news>science, configuration: text, image, map, and advertisement" as basic attribute information of the web page item 600. The device 100 may collect "weather: rainy, temperature: 5°C, user situation: using public transportation, collection path: shrink gesture, collection device: phone" as context information at the time when the web page item 600 is collected.

The device 100 may transmit the collected information (for example, the basic attribute information and the context information) with respect to the web page item 600 to the server 200. In this regard, the device 100 according to an exemplary embodiment may transmit the collected information with respect to the web page item 600 in the form of metadata to the server 200.

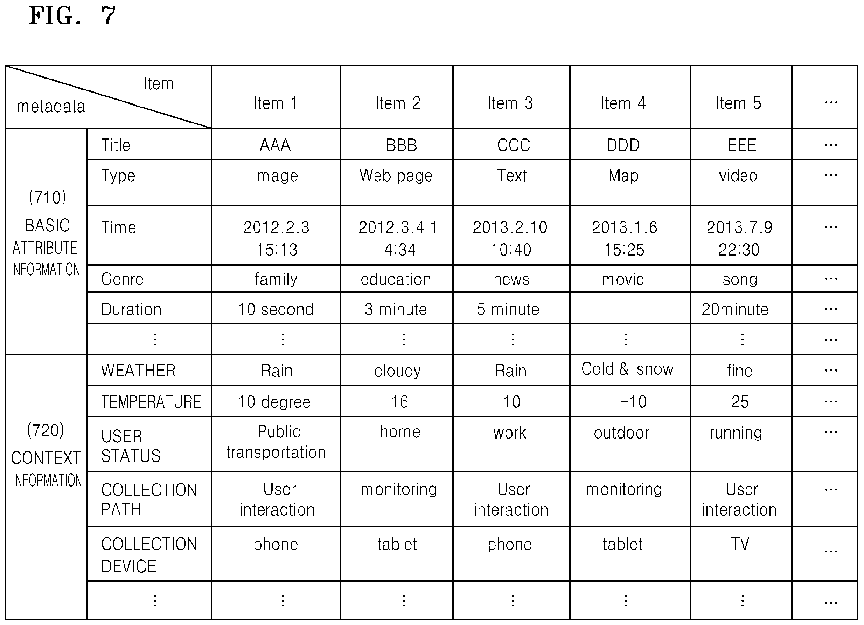

The server 200 according to an exemplary embodiment may update an item DB by using the information regarding the web page item 600 received from the device 100. This will be described with reference to FIG. 7 below.

FIG. 7 is a table for explaining information regarding items collected by a plurality of devices of a user according to an exemplary embodiment.

Referring to FIG. 7, the server 200 according to an exemplary embodiment may establish an item DB by using the information regarding the items collected by the plurality of devices of the user. In this regard, the information regarding the items collected by the plurality of devices may include basic attribute information 710 and context information 720.

The basic attribute information 710, which is information regarding attributes of the items, may include, for example, names of the items, types of the items, genre of the items, reproduction lengths of the items, thumbnail images of the items, link information of the items, etc., but is not limited thereto.

The context information 720, which is information regarding statuses collected by the device 100 when the items are collected, may include weather, temperature, a position, a user status, user's feelings, collection paths, identification information of the device 100 that collects the items, information regarding a type of the device 100, etc., but is not limited thereto.

For example, when the server 200 receives information regarding an "item 1" collected by the first device 100-1 from the first device 100-1, the server 200 may store and manage basic attribute information (title: AAA, type: image, collection time: 03.02.2012 15:13, genre: family image, reproduction length: 10 seconds, thumbnail image, etc.) regarding the "item 1" and context information (weather: rainy, temperature: 10°C, user situation: using public transportation, collection path: shrink gesture, collection device: phone, etc.) in an item DB. For example, the server 200 may classify the item DB according to a new standard or extract an item that fits a predetermined condition from the item DB.

The server 200 according to an exemplary embodiment may extract a recommendation item corresponding to a type of the device 100 by using the item DB when a recommendation item request is received from the device 100. The server 200 may select a recommendation item in further consideration of context information of the device 100 from the item DB. The server 200 according to an exemplary embodiment may select a recommendation item that fits a recommendation condition input by the user by using the item DB.

The server 200 according to an exemplary embodiment may analyze the information (or the item DB) regarding the items collected by the plurality of devices of the user and obtain and manage item use pattern information for each device, item use pattern information for each position, item use pattern information for each user situation (or feelings), item use pattern information for each weather, etc.

FIGS. 8A, 8B, and 8C are diagrams for explaining a method in which the device 100 generates thumbnail images 810, 820, and 830 of items according to an exemplary embodiment.

Referring to FIG. 8A, when a collection request gesture (for example, a shrink gesture) of a user is detected with respect to web page content including images and text, the device 100 may generate the thumbnail image 810 corresponding to the web page content by capturing an image part of the web page content and may collect information regarding the web page content.

The device 100 according to an exemplary embodiment may connect link information (information used to access the web page content) of the web page content to the thumbnail image 810 and display the link information and the thumbnail image 810 on a recommendation panel. The device 100 according to an exemplary embodiment may transmit the information (for example, the thumbnail image 810, the link information, etc.) regarding the web page content to the server 200.

Referring to FIG. 8B, when a collection request gesture of the user is detected with respect to image content displayed on an entire screen of the device 100, the device 100 may generate the thumbnail image 820 corresponding to the image content by reducing an image displayed on the entire screen and may collect information regarding the image content. In this regard, the device 100 may transmit the thumbnail image 820 and the information regarding the image content to the server 200.

Referring to FIG. 8C, when a collection request gesture of the user is detected with respect to text content displayed on the entire screen of the device 100, the device 100 may extract title information of the text content displayed on the entire screen and generate the thumbnail image 830 by using the extracted title information. When the title information of the text content is not extracted, the device 100 may generate the thumbnail image 830 by using a first line of the text content. In this regard, the device 100 may transmit the thumbnail image 830 and the information regarding the text content to the server 200.

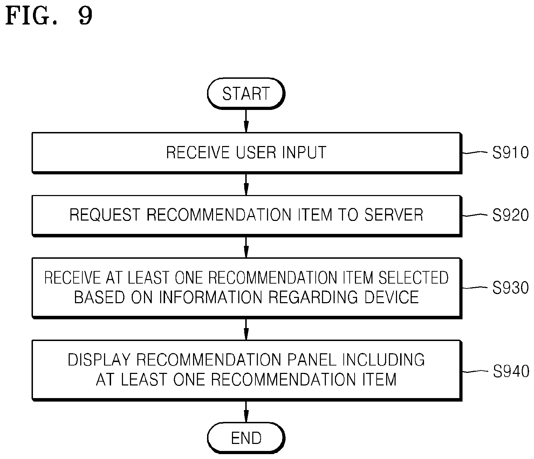

FIG. 9 is a flowchart of a recommendation panel providing method according to an exemplary embodiment.

In operation S910, the device 100 may receive a user input that requests a recommendation panel. The user input that requests the recommendation panel according to an exemplary embodiment may mean a gesture that requests the recommendation panel including a recommendation item or a user input that requests the recommendation item. For convenience of description, the user input may be expressed as a user gesture.

The user input that requests the recommendation panel according to an exemplary embodiment may vary. For example, the user input that requests the recommendation panel may include a drag gesture that involves dragging a finger, a stylus or an electronic pen from one side of the screen to another side (for example, a gesture that involves dragging the finger, stylus, or the electronic pen from a bottom end of a screen to a top end), a gesture that involves selecting a predetermined button (for example, a gesture that involves pressing a home button twice), an unlock gesture, a gesture that involves pressing a predetermined button for more than a predetermined period of time (for example, a gesture that involves pressing a capture button for more than 10 seconds), etc., but is not limited thereto.

A gesture in which the user drags the finger to the top end after touching the finger on a bottom bezel part will be described below as an example of the gesture used to request the recommendation panel for convenience of description.

The recommendation panel according to an exemplary embodiment means a predetermined space or region on which the recommendation item recommended to the user is displayed. The recommendation panel may be displayed on a whole or partial region of the screen.

In operation S920, the device 100 may request recommendation items that are to be displayed on a recommendation panel of the device 100 to the server 200 according to the user input.

In this regard, the device 100 according to an exemplary embodiment may transmit information regarding the device 100 to the server 200. For example, the device 100 may transmit type information (for example, a mobile terminal, a tablet PC, a DTV, a digital camera, an MP3 player, etc.) of the device 100 and identification information (for example, device ID information, device address information, account information, etc.) to the server 200.

The device 100 according to an exemplary embodiment may transmit hardware information of the device 100, software information, etc. to the server 200.

According to an exemplary embodiment, when the type information of the device 100, hardware information, software information, etc. are connected to the identification information (for example, a device ID, a device address, an account, etc.) of the device 100 and are previously stored in the server 200. Although the device 100 transmits only the identification information of the device 100 to the server 200, the server 200 may acknowledge a type of the device 100. Thus, the device 100 may not transmit the type information of the device 100, the hardware information, the software information, etc. to the server 200 and may transmit only the identification information.

The device 100 according to an exemplary embodiment may transmit context information of the device 100 to the server 200.

The context information of the device 100 according to an exemplary embodiment may include environment information collected by the device 100 through sensors when the user input that requests the recommendation panel is received, status information of the device 100, status information of the user that analyzes data collected through sensors, schedule information of the user, etc.

That is, the device 100 may transmit the environment information such as weather, temperature, humidity, intensity of illumination, date, time, etc. when the user input that requests the recommendation panel is received, the status information of the user such as a position of the device 100, a network connection state of the device 100, a movement of the device 100, etc. to the server 200. The device 100 may analyze a message, an e-mail, schedule information, SNS use log information, etc. that are input by the user, infer feelings information (for example, joy, sadness, loneliness, happiness, etc.) of the user, moving status information (for example, exercise, walking, commuting, etc.) of the user, etc., and transmit the inferred feelings information of the user and moving status information of the user to the server 200.

According to another exemplary embodiment, the device 100 may transmit to the message, the e-mail, the schedule information, the SNS use log information that are input by the user, acceleration information of the device 100, position information, etc. to the server 200, and the server 200 may infer the feelings information of the user, the moving status information of the user, etc.

In operation S930, the device 100 may receive at least one recommendation item selected based on information regarding the device 100. For example, the device 100 may receive at least one recommendation item selected based on item use pattern information according to the type of the device 100.

The "item use pattern information" in the specification means result information obtained by analyzing an item use frequency of the user for each device and extracting a type of an item having a high use frequency for each device. For example, when the user reproduces a moving image the most and a game application the second most in a first device, an item use pattern of the first device may be "moving image>e-book content>game application, ..."

According to an exemplary embodiment, the device 100 may receive at least one recommendation item selected based on at least one of hardware information (for example, a display size, resolution, whether a touch panel exists, whether a camera exists, etc.) of the device 100, software information (for example, a type of an OS, software version information, whether multitasking exists, etc.), etc.

According to an exemplary embodiment, the device 100 may receive at least one recommendation item selected by the server 200 in further consideration of information regarding a time at which the device 100 requests the recommendation item. The device 100 may receive at least one recommendation item selected by the server 200 in further consideration of at least one of the position information of the device 100 and user status information.

According to an exemplary embodiment, the recommendation item may be an item previously used in the device 100, an item previously used in another device of the user, and an item obtained from an external server. The recommendation item may be an item collected according to a collection request gesture of the user.

The recommendation item according to an exemplary embodiment may include at least one of an application, a moving image, a still image, a text file, a web page, etc., but is not limited thereto.

In operation S940, the device 100 may display the recommendation panel including at least one recommendation item. In this regard, the device 100 may display the recommendation panel on a predetermined screen thereof.

The predetermined screen may include a first screen that is first displayed on the device 100 when an operation mode of the device 100 is switched from a standby mode to an active mode (e.g., when the device 100 is unlocked, power of the device 100 is turned on, etc.) For example, the device 100 may display the recommendation panel on a last page of a plurality of pages having icons arrayed thereon, or may provide the recommendation panel in an object (for example, a widget) for using a service on a predetermined region of a background screen. The first screen may also be the recommendation panel.

When there is a plurality of recommendation items, the device 100 according to an exemplary embodiment may display the plurality of recommendation items in a list on the recommendation panel. According to an exemplary embodiment, the recommendation item displayed on the recommendation panel may be configured as link information or index information connected to an image of the recommendation item.

The device 100 according to an exemplary embodiment may move and display the recommendation panel from one side to another side. For example, when a recommendation panel request gesture of the user is a gesture that involves flicking a finger from a bottom end of the screen to a top end thereof, the device 100 may move the recommendation panel from the bottom end of the screen to the top end thereof to provide the recommendation item.

The device 100 according to an exemplary embodiment may align the at least one recommendation item on the recommendation panel according to a collection time. That is, the device 100 may align the at least one recommendation items in order of the collection time.

According to another exemplary embodiment, the device 100 may align the at least one recommendation item on the recommendation panel based on a frequency of use. That is, the device 100 may align the recommendation item on the recommendation panel in order of popularity. For example, the device 100 may sequentially align the recommendation item from the right of the recommendation panel in descending order of a reproduction number.

According to an exemplary embodiment, when the user input is received, the device 100 may provide the recommendation panel on the predetermined screen in response to the user input and simultaneously transmit recommendation item request information including at least one of the information regarding the device 100 and the context information to the server 200, and display the recommendation item received from the server 200 on the recommendation panel.

The device 100 according to an exemplary embodiment may perform operations S910 through S940 through a resident program installed in the device 100.

The resident program may be a program that executes a task related to an operation of the device 100 according to an exemplary embodiment while operating in a background state. The resident program may automatically operate if a job to be processed occurs and execute a necessary job.

For example, when a user touch input is received, the resident program installed in the device 100 may request the recommendation item from the server 200, receive the recommendation item from the server 200, and display the recommendation panel including the recommendation item on a predetermined region.

According to an exemplary embodiment, the user may acknowledge the recommendation panel including the recommendation item through a touch input that touches a finger on a bottom bezel part and drags the finger to a top end without executing a specific application.

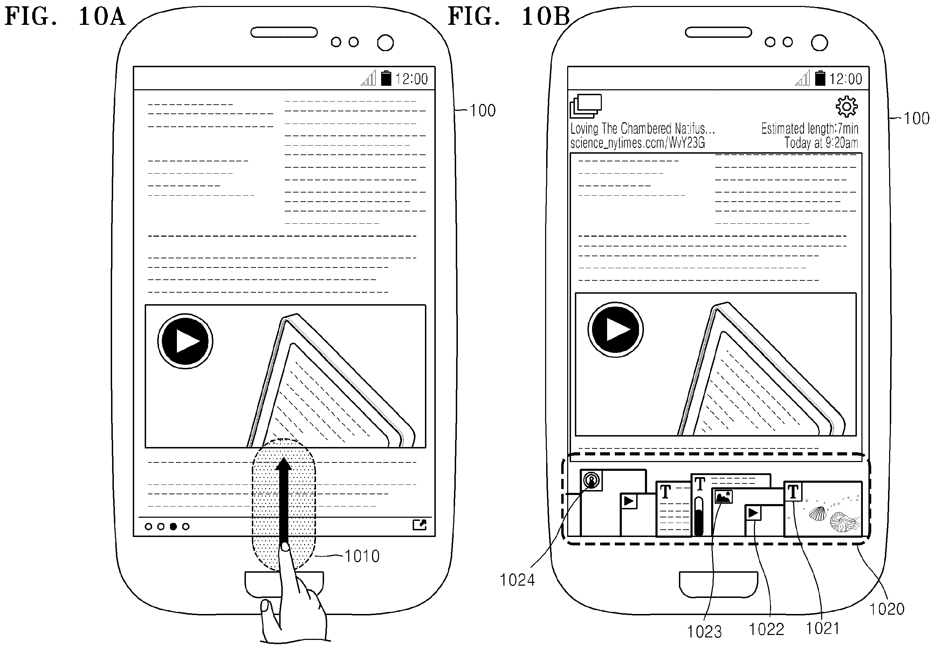

FIGS. 10A and 10B illustrate a recommendation panel 1020 according to an exemplary embodiment.

Referring to FIG. 10A, when a user drags a finger from a bottom end of a screen to a top end thereof, the device 100 may detect a user gesture 1010 that requests the recommendation panel. In this case, the device 100 may request a recommendation item that is to be displayed on the recommendation panel from the server 200. In this regard, the device 100 may transmit information regarding a type of the device 100, identification information, or context information to the server 200.

Referring to FIG. 10B, the device 100 may display the recommendation panel 1020 on the bottom end of the screen. The device 100 may align the recommendation item received from the server 200 on the recommendation panel 1020. The recommendation item may be an item recommended based on the type of the device 100 or the context information thereof.

The recommendation item may be displayed in link information or index information connected to a thumbnail image (or a preview image) generated at the time when items are collected. A plurality of recommendation items according to an exemplary embodiment may overlay each other and may be displayed on the recommendation panel 1020. According to an exemplary embodiment, among the overlaying recommendation items, items having a high use frequency or recently collected items may be displayed on the uppermost part of the recommendation panel 1020. That is, the device 100 may align the plurality of recommendation items on the recommendation panel 1020 based on popularity (evaluation) of the recommendation items or collection time.

According to another exemplary embodiment, sizes of the recommendation items displayed on the recommendation panel 1020 may be adjusted based on the popularity of the recommendation items or a collection time. For example, the higher the use frequency or more recently collected the recommendation items, the larger the images the device 100 may display on the recommendation panel 1020.

According to an exemplary embodiment, the device 100 may align the recommendation items on the recommendation panel 1020 based on capacity information (for example, reproduction length information of the recommendation items) of the recommendation items. For example, the recommendation items may be aligned in ascending order of a reproduction length, and may be displayed on the recommendation panel 1020 by adjusting sizes of the recommendation items according to reproduction lengths.

In this regard, according to an exemplary embodiment, when the recommendation items are text content, the device 100 or the server 200 may estimate a reproduction length of the text content in consideration of an average reading speed of the user, etc.

The recommendation items displayed on the recommendation panel 1020 may have icons indicating item types inserted into the recommendation items. For example, when the recommendation items are text, "T" 1021 may be displayed, when the recommendation items are moving image content, a reproduction display icon [e.g. an isosceles triangle with one vertical side, the two remaining sides being of equal length and meeting at a vertex to the right of the vertical side] "►" 1022 may be displayed, when the recommendation items are photo content, an icon 1023 indicating a photo may be displayed, and when the recommendation item is broadcasting content, an icon 1024 indicating broadcasting may be displayed.

According to an exemplary embodiment, when a user gesture is performed that involves flicking a predetermined region of the recommendation panel 1020 to the left or right or swiping the predetermined region while touching the predetermined region, the device 100 may scroll the recommendation items aligned on the recommendation panel 1020 according to the user gesture.

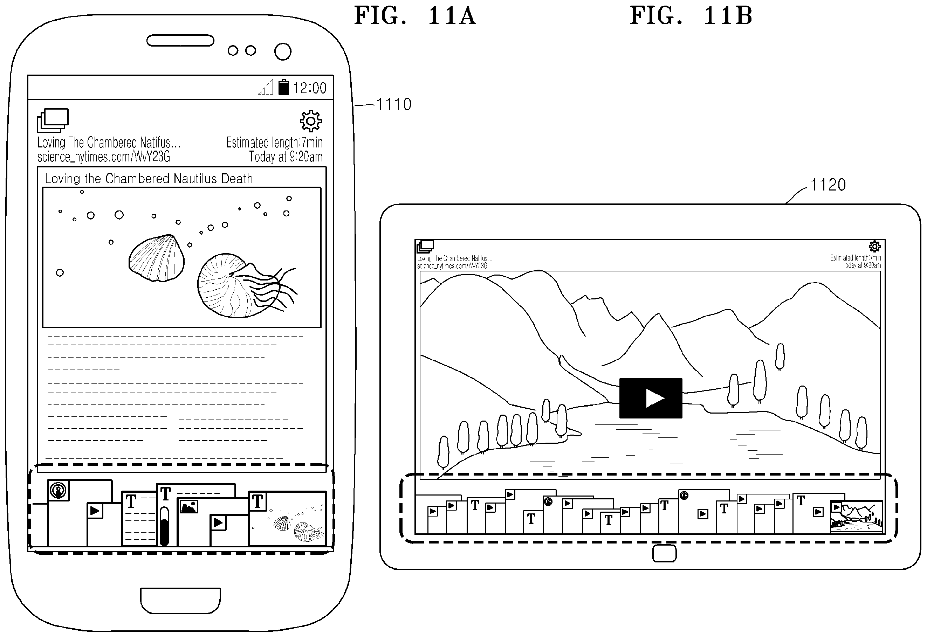

FIGS. 11A and 11B illustrate recommendation panels including different recommendation items for each device according to an exemplary embodiment.

A case in which a user views web pages or text documents mainly through a first device 1110 that is a mobile phone and views moving images mainly through a second device 1120 that is a tablet PC will now be described.

Referring to FIG. 11A, when a recommendation panel request gesture of the user is detected, the first device 1110 may display recommendation items provided by the server 200 based on item use pattern information for each device on a recommendation panel.

For example, since the first device 1110 mainly uses web pages and text documents according to the item use pattern information, the first device 1110 may receive relatively more recommendation items of text than those of moving images or photos from the server 200 and display the recommendation items on the recommendation panel.

Referring to FIG. 11B, when the recommendation panel request gesture of the user is detected, the second device 1120 may display recommendation items provided by the server 200 based on item use pattern information for each device on the recommendation panel.

For example, since the second device 1120 mainly uses moving images according to the item use pattern information, the second device 1120 may receive relatively more recommendation items of moving images than those of still images or text from the server 200 and display the recommendation items on the recommendation panel.

The server 200 may provide the recommendation items in consideration of hardware information for each device. For example, since a screen size of the first device 1110 is greater than that of the second device 1120, the server 200 may provide more recommendation items to the second device 1120 than the first device 1110.

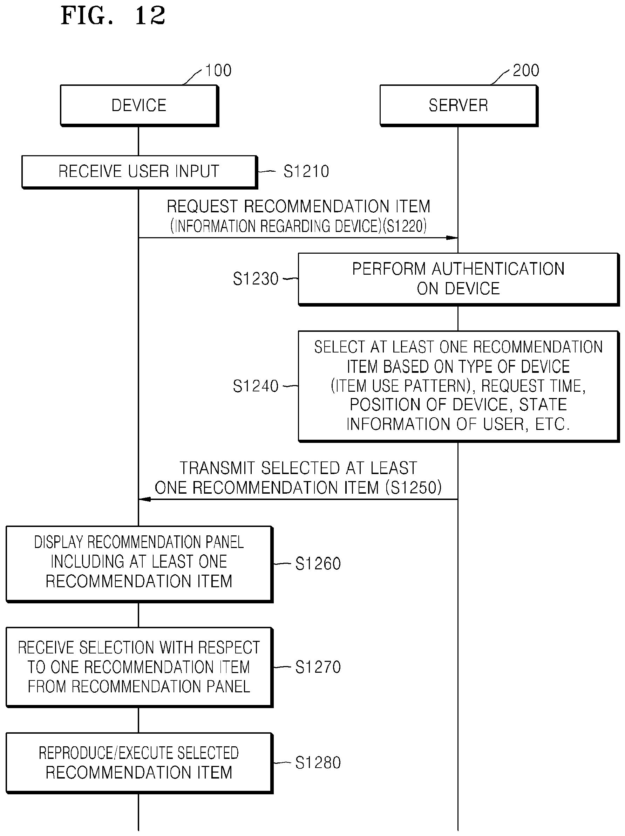

FIG. 12 is a flowchart of a recommendation item providing method according to an exemplary embodiment.

In operation S1210, the device 100 may receive a user input. Operation S1210 corresponds to operation S910 of FIG. 9, and thus a detailed description thereof is omitted here.

In operation S1220, the server 200 may receive a request for recommendation items that are to be displayed on a recommendation panel of the device 100. That is, the device 100 may transmit the recommendation item request including information regarding the device 100 to the server 200 in response to the user input. In this regard, according to an exemplary embodiment, the server 200 may receive at least one of information regarding a type of the device 100, identification information of the device 100, and context information of the device 100 from the device 100. Operation S1220 corresponds to operation S920 of FIG. 9, and thus a detailed description thereof is omitted here.

In operation S1230, the server 200 may perform authentication on the device 100. For example, the server 200 may authenticate whether the device 100 is a device that may provide the recommendation items based on the identification information (for example, a device ID and account information) of the device 100.

According to an exemplary embodiment, the server 200 may receive authentication information from the device 100. The authentication information may be used to authenticate whether the device 100 is a device that is allowed to provide the recommendation items. The authentication information may be information encrypted by using an encryption key previously consulted with the server 200. According to an exemplary embodiment, a plurality of devices of the user may have the same authentication information.

In operation S1240, the server 200 may select at least one recommendation item based on the type of the device 100. For example, the server 200 may select at least one recommendation item based on item use pattern information of the device 100.

According to an exemplary embodiment, the server 200 may generate the item use pattern information of the device 100 by using information regarding items that are collected by using at least one method of FIGS. 4 through 6 and are used in the device 100. For example, the server 200 may infer a type of content mainly used in the device 100, a type of an application, etc.

Thus, when the server 200 receives a recommendation item request from the device 100, the server 200 may extract item use pattern information corresponding to the device 100 and select a recommendation item that is to be transmitted to the device 100 according to the extracted item use pattern information.

The server 200 according to an exemplary embodiment may select at least one recommendation item based on at least one of hardware information of the device 100 and software information.

For example, the server 200 may adjust the number of recommendation items that are to be provided to the device 100 according to a screen size of the device 100. When the device 100 is an IPTV in which user input is inconvenient, the server 200 may provide recommendation items by changing a graphical user interface (GUI), etc. or may provide recommendation items (for example, a search application that is easy to search by using a remote controller) which allows for a convenient user input. The server 200 may adjust shapes (for example, sizes, lengths, etc.) of recommendation items according to capacity information (for example, reproduction lengths, content sizes, etc.) of recommendation items, and provide the recommendation items whose shapes are adjusted to the device 100.

According to an exemplary embodiment, the server 200 may select at least one recommendation item from items previously used in the plurality of devices of the user. That is, the server 200 may provide the recommendation items to the device 100 based on an item use history of the user.

The server 200 according to an exemplary embodiment may select recommendation items in further consideration of the context information (for example, a recommendation item request time, a position of the device 100, user state information, device state information, user feelings information, etc.) of the device 100.

For example, when a time when the recommendation item request is received from the device 100 is weekday mornings, and the user carrying the device 100 jogs in the morning and reads a newspaper in the morning through the device 100, the server 200 may select music content, news content, etc. that are suitable for preparing for commuting and going to school, morning jogging, and reading of the newspaper as recommendation items.

When a time that the recommendation item request is received from the device 100 is weekday evenings, and the user enjoys animation content along with his/her kids mainly in the evening on weekdays through the device 100, the server 200 may select animation contents having high reproduction frequency as the recommendation items.

According to an exemplary embodiment, when the user is walking as a result of acknowledging the context information received from the device 100, the server 200 may select audio and moving images excluding text items as the recommendation items.

According to an exemplary embodiment, when the user is driving, as a result of acknowledging the context information received from the device 100, the server 200 may select radio broadcasting content, and music content relating to voice as the recommendation items.

The server 200 according to an exemplary embodiment may select a highly popular item as a recommendation item in further consideration of evaluation information of another user.

In operation S1250, the server 200 may transmit the selected at least one recommendation item to the device 100.

In operation S1260, the device 100 may display the recommendation panel including the at least one recommendation item on a screen. Operations S1250 and S1260 correspond to operations S930 and S940 of FIG. 9, and thus detailed descriptions thereof are omitted here.

In operation S1270, the device 100 may receive a selection with respect to at least one of the at least one recommendation item included in the recommendation panel. For example, when the user touches (for example, taps, double taps, swipes, etc.) a region on which content that is to be reproduced is displayed in the recommendation panel, the device 100 may detect a user selection with respect to a touched recommendation item.

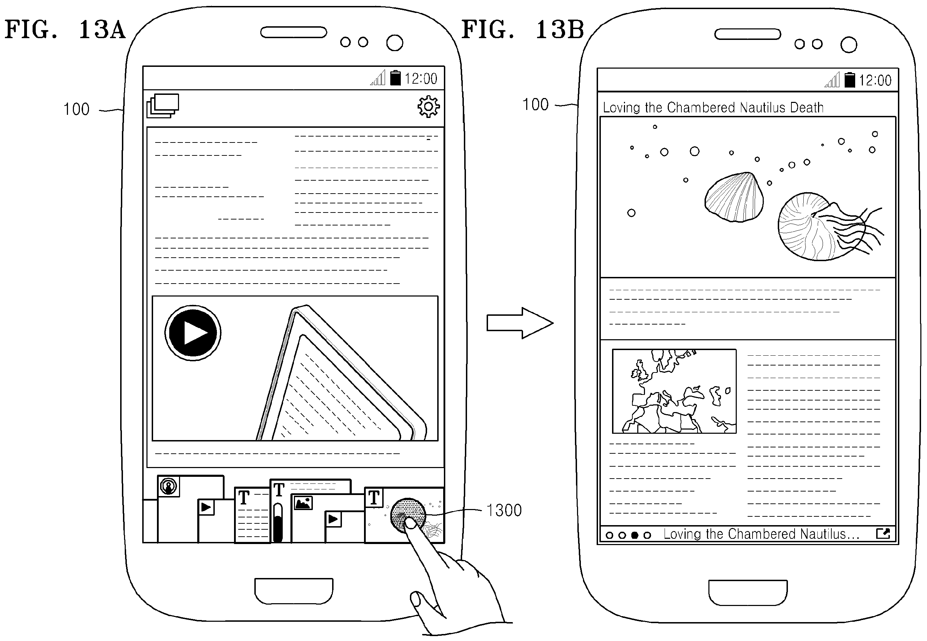

In operation S1280, the device 100 may reproduce or execute the selected recommendation item. This will be described in more detail with reference to FIG. 13.

FIGS. 13A and 13B are diagrams for explaining a method of reproducing/executing a recommendation item 1300 according to an exemplary embodiment.

Referring to FIG. 13A, the device 100 may display recommendation items selected based on a type of the device 100 on a recommendation panel. According to an exemplary embodiment, the device 100 may overlay and align recommendation items on the recommendation panel. When a user selects the recommendation item 1300 from the recommendation panel, the device 100 may detect the selected recommendation item 1300.

Referring to FIG. 13B, the device 100 may execute or reproduce the recommendation item 1300 selected by the user. For example, when the selected recommendation item 1300 is a web page, the web page may be displayed on a screen. When the selected recommendation item 1300 is movie content of which reproduction stops, the device 100 may reproduce the movie content after a point of time when the reproduction is stopped. When the recommendation item 1300 selected by the user is an application, the device 100 may execute the application selected by the user. In this regard, when the application selected by the user is not previously installed in the device 100, the device 100 may search for the application in an external server and install a found application in the device 100.

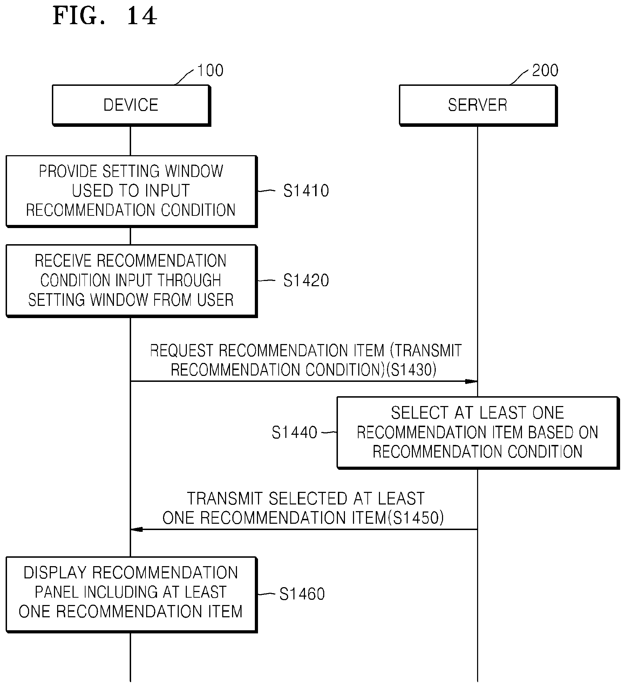

FIG. 14 is a flowchart of a recommendation item providing method based on a recommendation condition of a user according to an exemplary embodiment.

In operation S1410, the device 100 may provide a setting window used to input the recommendation condition. The setting window used to input the recommendation condition may be provided in the form of a GUI.

In operation S1420, the device 100 may receive an input of the recommendation condition through the setting window from the user. For example, the device 100 may receive an input of at least one of item types, item reproduction time, item use purpose, item collection time, and user feelings state information as the recommendation item.

In operation S1430, the device 100 may request recommendation items while transmitting the recommendation condition to the server 200.

In operation S1440, the server 200 may select at least one item based on the recommendation condition. For example, when the user sets a "moving image" among item types and "five minutes" of the item reproduction time as the recommendation condition, the server 200 may select music video contents of five minutes from among music video contents that are mainly reproduced in the device 100.

In operation S1450, the server 200 may transmit the at least one recommendation item selected based on the recommendation condition to the device 100.

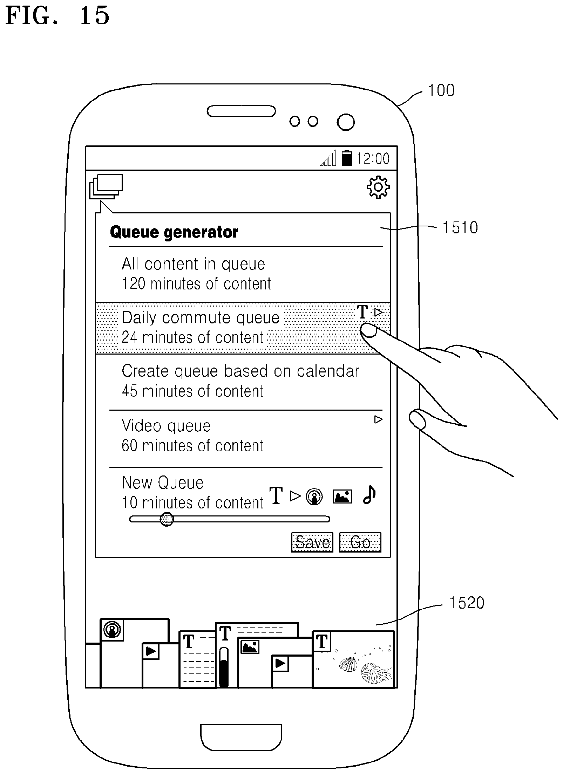

In operation S1460, the device 100 may display a recommendation panel including the at least one recommendation item selected based on the recommendation condition. This will be described in more detail with reference to FIG. 15.

FIG. 15 illustrates a setting window 1510 used to input a recommendation condition according to an exemplary embodiment.

Referring to FIG. 15, the device 100 may display the setting window 1510 used to input the recommendation condition on a screen. In this regard, a user may acknowledge menus of the setting window 1510 and input item types, item reproduction time, item use purpose, item collection time, and a feelings state.

For example, when the user is commuting and takes the subway for about 24 minutes, the user may input "item use purpose: items for use in the basement when commuting", "item reproduction time: 24 minutes", "item type: multimedia content", etc. so as to receive recommendation items that may be used when commuting by subway for 24 minutes.

In this regard, the device 100 may request recommendation items that are to be displayed on a recommendation panel 1520 while transmitting the recommendation condition input by the user to the server 200. The server 200 may select recommendation items in consideration of the recommendation condition input by the user, an item use pattern of the device 100, hardware information of the device 100, software information, etc. and may transmit the selected recommendation items to the device 100. For example, when the user mainly reads an electronic newspaper while commuting, the server 200 may select the recommendation items relating to electronic newspaper content, news moving image content, etc.

When the user selects "commuting" as the recommendation condition, the device 100 may commute by subway and automatically extract information that the user takes subway for 24 minutes while commuting based on previously collected event information, and transmit the extracted information to the server 200.

The device 100 may receive the recommendation items selected based on the recommendation condition input by the user from the server 200 and display the received recommendation items on the recommendation panel 1520.

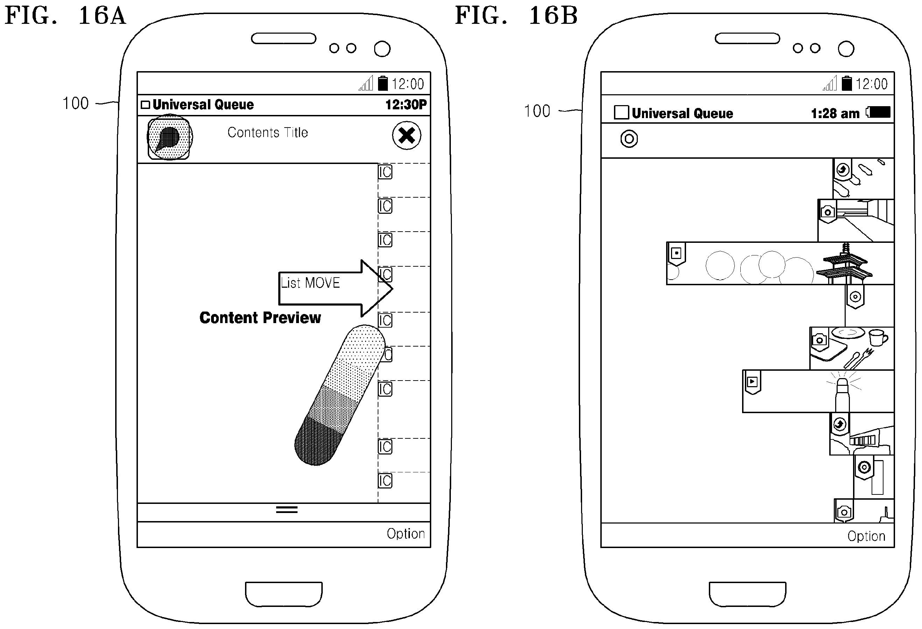

FIGS. 16A and 16B illustrate recommendation item lists according to an exemplary embodiment.

Referring to FIG. 16A, the device 100 may provide an editing window used to edit the recommendation item list displayed on a recommendation panel. A user may acknowledge the recommendation item list displayed on the recommendation panel through the editing window and may change an arrangement order of the recommendation item list.

For example, according to an exemplary embodiment, the device 100 may detect a user touch gesture (for example, a tap gesture, a drag & drop gesture, etc.) and may change positions of recommendation items according to the user touch gesture.

The device 100 according to an exemplary embodiment may provide previews of recommendation items selected by the user through the editing window.

Referring to FIG. 16B, according to an exemplary embodiment, a plurality of recommendation items may be displayed on the recommendation panel by differently adjusting a size of a thumbnail image corresponding to each of the recommendation items according to reproduction time lengths.

The device 100 according to an exemplary embodiment may adjust sizes of thumbnail images according to relative reproduction time lengths between the recommendation items and according to absolute reproduction time lengths therebetween.

The device 100 according to an exemplary embodiment may predict reproduction time lengths of text content in consideration of a user capability. For example, when a user AAA of the device 100 reads text twice as fast as general users on average, if general users read XYZ content for 10 minutes on average, the device 100 may expect a reproduction time length of the XYZ content in consideration of a reading capability of the user AAA.

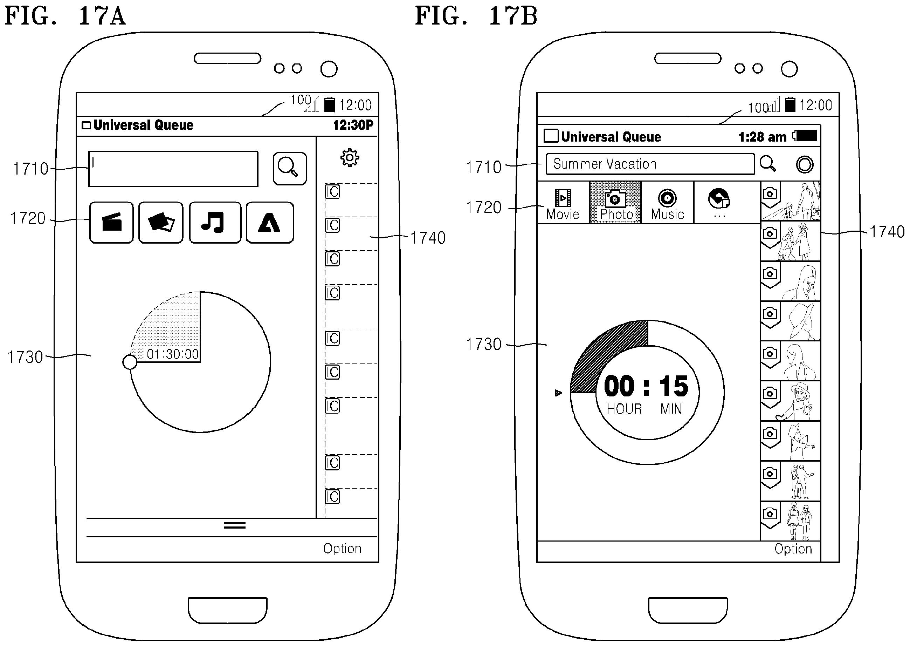

FIGS. 17A and 17B illustrate recommendation item lists corresponding to recommendation conditions according to an exemplary embodiment.

Referring to FIG. 17A, the device 100 may provide an input window used to input the recommendation condition. The input window may include a search field 1710 used to input a search keyword, a type field 1720 used to select an item type, a time field 1730 used to select a reproduction time length, etc. When a user inputs the recommendation condition, the device 100 may display the recommendation item list corresponding to the input recommendation condition on a certain region.

Referring to FIG. 17B, when a "summer vacation" is input into the search field 1710, a "photo" is selected in the type field 1720, and "15 minutes" is input in the time field 1730, the device 100 may display a photo item list numbering as many as the number of summer vacation photos that may be viewed within 15 minutes on the recommendation panel 1740.

According to an exemplary embodiment, the device 100 may request and receive photos numbering as many as the number of summer vacation photos that may be viewed within 15 minutes from the server 200 as recommendation items. The device 100 may extract photos relating to the summer vacation from among the recommendation items received from the server 200 that number as many as the number of photos that the user may view within 15 minutes.

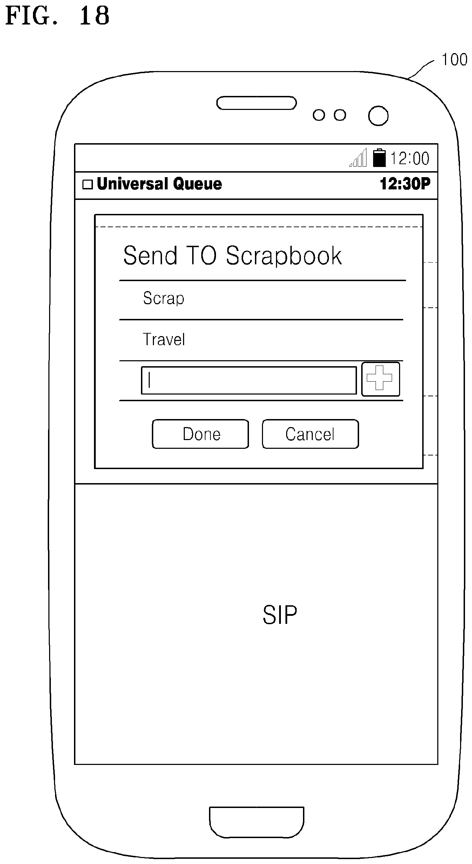

FIG. 18 is a diagram for explaining a method of transmitting recommendation items to an external device according to an exemplary embodiment.

Referring to FIG. 18, the device 100 may transmit the recommendation items displayed on a recommendation panel to the external device. The external device according to an exemplary embodiment may include a cloud server, a web server, an SNS server, a device owned by another user, etc. For example, the device 100 may upload at least one recommendation item to the SNS server via an SNS account of a user.

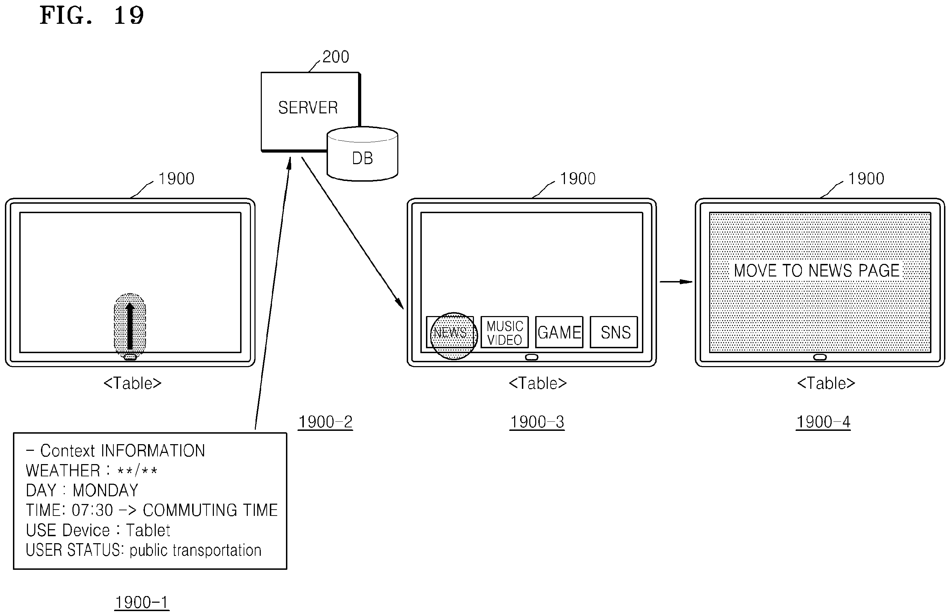

FIG. 19 illustrates screens that provide recommendation items selected based on context information according to an exemplary embodiment.

Referring to 1900-1, a device 1900 may detect a recommendation panel request gesture of a user. In this regard, the device 1900 may request the recommendation items while transmitting information (for example, indicating an ID of the device 1900 or that the device 1900 is a tablet PC) regarding a type of the device 1900 and the context information to the server 200.

For example, the device 1900 may transmit information such as date, day (for example, Monday), time (for example, 7:30 a.m., commuting time), a use device (for example, a tablet PC), a user status (for example, using public transportation), etc. as the context information to the server 200 when the recommendation items are requested.

Referring to 1900-2, the server 200 may select recommendation items from among items previously used in a plurality of devices owned by the user in consideration of the context information received from the device 1900. For example, the server 200 may select an item that the user frequently uses in the tablet PC at a public transportation facility during the commuting time on the weekday morning as the recommendation items (for example, a news providing application, a music video, a mini game, and an SNS application).

According to another exemplary embodiment, the server 200 may calculate a time when the user uses the public transportation facility during the commuting time on the weekday morning and may select an item suitable for consumption while using the public transportation facility as the recommendation item.

Referring to 1900-3, the device 1900 may receive the recommendation items (for example, the news providing application, the music video, the mini game, and the SNS application) from the server 200 and may display a list of the received recommendation items (for example, the news providing application, the music video, the mini game, and the SNS application) on a recommendation panel.

Referring to 1900-4, when the user selects the "news providing application" from among the recommendation items displayed on the recommendation panel, the device 1900 may execute the news providing application and display a new page on a screen.

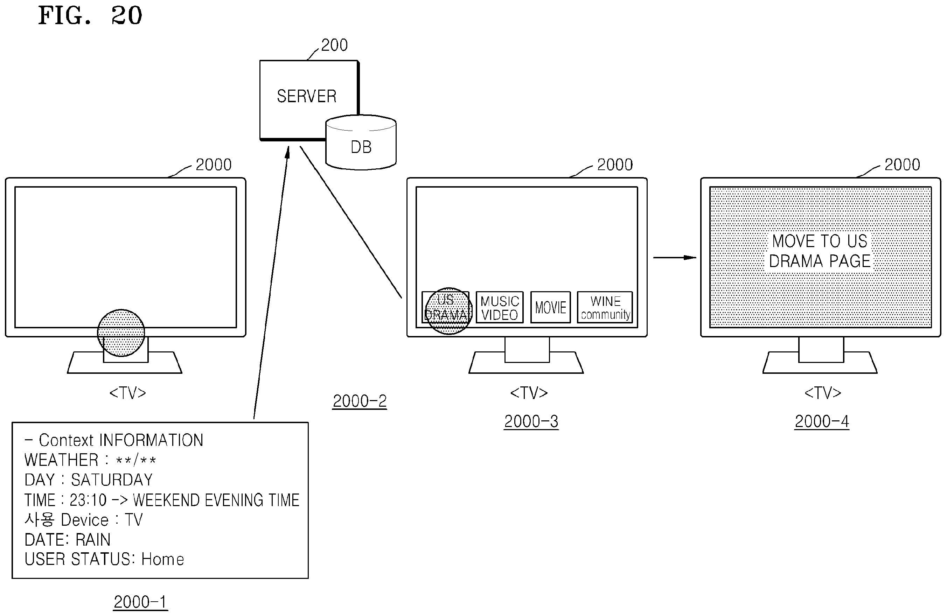

FIG. 20 illustrates screens that provide recommendation items selected based on context information according to another exemplary embodiment.

Referring to 2000-1, a device 2000 may detect a recommendation panel request gesture of a user. In this regard, the device 2000 may request the recommendation items while transmitting information regarding a type of the device 2000 and the context information to the server 200.

For example, the device 2000 may transmit information such as date, day (for example, Saturday), time (for example, 23:10 p.m., on a weekend evening), a use device (for example, a TV), weather (for example, rainy), a user status (for example, at home), etc. as the context information to the server 200 when the recommendation items are requested.

Referring to 2000-2, the server 200 may select recommendation items from among items previously used in a plurality of devices owned by the user in consideration of the context information received from the device 2000. For example, the server 200 may select items that the user frequently uses via the TV on weekend evenings as the recommendation items (for example, a US drama, a music video, movie, a wine community, etc.) The server 200 may select an item that the user uses via the TV while taking a rest on weekend evenings as the recommendation item.

Referring to 2000-3, the device 2000 may receive the recommendation items (for example, the US drama, the music video, movie, the wine community, etc.) from the server 200 and may display a list of the received recommendation items (for example, the US drama, the music video, movie, the wine community, etc.) on a recommendation panel.

Referring to 2000-4, when the user selects "US drama content" from among the recommendation items displayed on the recommendation panel, the device 2000 may display a US drama page on a screen.

FIGS. 21A and 21B are block diagrams of the device 100 according to various exemplary embodiments.

Referring to FIG. 21A, the device 100 may include a communication unit 110 (e.g., a communicator, etc.), a display unit 131(e.g., a display, etc.), a user input unit 140 (e.g., a user input, etc.), and a control unit 160 (e.g., a controller, processor, etc.). However, these elements are not all essential. The device 100 may be implemented with more or less elements than the elements of FIG. 21A.

For example, referring to FIG. 21B, the device 100 according to an exemplary embodiment may include the communication unit 110, a sensing unit 120 (e.g., a sensor, etc.), an output unit 130 (e.g., an output, etc.), an image processing unit 150 (e.g., an image processor, etc.), the control unit 160, and a memory 170.

The above elements will now be described below.

The communication unit 110 may include one or more elements for allowing communication between the device 100 and the server 200. For example, the communication unit 110 may include a mobile communication unit 111, a short-distance communication unit 112, a wired communication unit 113, a wireless communication unit 114, and a position information unit 115 which provides information on the location of the device.

A short-distance communication technology according to an exemplary embodiment may include a wireless LAN (Wi-Fi), Bluetooth, ZigBee, Wi-Fi Direct (WFD), ultra wideband (UWB), infrared data association (IrDA), and Bluetooth low energy (BLE), but is not limited thereto.

The sensing unit 120 may collect events that occur in the device 100. For example, the sensing unit 120 may sense a position of the device 100, user state information, application information regarding an application used in the device 100, exchanged message information, exchanged email information, call history information, SNS use information, web page use information, transaction information, etc.

The sensing unit 120 may include various sensors so as to collect event information. For example, the sensing unit 120 may include an acceleration sensor, a tilt sensor, a gyro sensor, a 3-axis magnetic sensor, a voice recognition sensor, a luminance sensor, a temperature sensor, an image sensor (e.g., a camera), a touch sensor, etc., but is not limited thereto.

The sensing unit 120 according to an exemplary embodiment may interoperate with an SSP 10. The SSP 10 may include a sensor hub and an SSP manager. In this regard, according to an exemplary embodiment, the sensing unit 120 may be connected to the sensor hub, and the SSP manager may be included in a framework of an AP 161.

Thus, the sensor hub may collect sensing information (the event information regarding the events occurring in the device 100) via the sensing unit 120. In this regard, in a case where the AP 161 in a sleep mode has to be active, the sensor hub may transmit an interrupt signal to the SSP manager so as to inform the SSP manager of data to be transmitted.

The SSP manager may transmit a signal for requesting the sensor hub for a type and length of the data to be transmitted by the sensor hub. In this case, the sensor hub may transmit to the SSP manger content including the type and length of the data to be transmitted. The SSP manager may transmit a start-to-read message to the sensor hub, and when the sensor hub receives the start-to-read message, the sensor hub may process sensing data to a predefined packet and then may transmit the packet to the SSP manager.

The output unit 130 may function to output an audio signal, a video signal, or a vibration signal and may include a display unit 131, a sound output unit 132, a vibration motor 133, etc.

The display unit 131 displays and outputs information that is processed in the device 100. For example, the display unit 131 may display a recommendation panel including recommendation items on a screen (e.g., a first screen).

When the display unit 131 and a touch pad form a layer structure and then are formed as a touch screen, the display unit 131 may be used as both an output device and input device. The display unit 131 may include at least one of a liquid crystal display (LCD), a thin film transistor-liquid crystal display (TFT-LCD), an organic light-emitting diode (OLED) display, a flexible display, a 3D display, and an electrophoretic display. Also, according to a type of the device 100, the device 100 may include two or more display units 131. In this regard, the two or more display units 131 may face each other by using a hinge.

The sound output unit 132 may output audio data that is received from the communication unit 110 or is stored in the memory 170. The sound output unit 132 may also output a sound signal (e.g., a call signal receiving sound, a message receiving sound, etc.) related to functions performed by the device 100. The sound output unit 132 may include a speaker, a buzzer, etc.

The vibration motor 133 may output a vibration signal. For example, the vibration motor 133 may output the vibration signal that corresponds to an output of the audio data (e.g., the call signal receiving sound, the message receiving sound, etc.) or video data. Also, when a touch is input to the touch screen, the vibration motor 133 may output a vibration signal.

The user input unit 140 may be a unit by which the user inputs data so as to control the device 100. For example, the user input unit 140 may include a key pad, a dome switch, a touch pad (a touch capacitive type touch pad, a pressure resistive type touch pad, an infrared beam sensing type touch pad, a surface acoustic wave type touch pad, an integral strain gauge type touch pad, a Piezo effect type touch pad, or the like), a jog wheel, and a jog switch, but is not limited thereto.

The image processing unit 150 may generate thumbnail images or preview images of recommendation items displayed on the recommendation panel. For example, when web page content includes images and text, the image processing unit 150 may capture only images and generate thumbnail images or preview images corresponding to the web page content.

When a user collection request gesture with respect to image content displayed on an entire screen is detected, the image processing unit 150 may reduce images displayed on the entire screen and generate thumbnail images or preview images corresponding to the image content.

When a user collection request gesture with respect to text content displayed on the entire screen is detected, the image processing unit 150 may extract title information of the text content displayed on the entire screen and generate thumbnail images or preview images corresponding to the text content. If the title information of the text content is not extracted from the text content, the image processing unit 150 may generate the thumbnail images or the preview images corresponding to the text content by using a first line of the text content.

The control unit 160 may generally control all operations of the device 100. That is, the control unit 160 may execute programs stored in the memory 170 and accordingly may control the communication unit 110, the sensing unit 120, the output unit 130, the user input unit 140, the image processing unit 150, the memory 170, etc.

The control unit 160 may include the AP 161 and a communication processor 162. The AP 161 may control execution of various applications stored in the memory 170. The communication processor 162 may control various communication functions. According to an exemplary embodiment, the AP 161 and the communication processor 162 may be integrally implemented as one hardware device or separately implemented as independent hardware devices.

The memory 170 may store a program to process and to control the control unit 160, or may store a plurality of pieces of data (e.g., recommendation items, information regarding content, sensing information, etc.) that are input/output.

The memory 170 may include at least one storage medium from among a flash memory-type storage medium, a hard disk-type storage medium, a multimedia card micro-type storage medium, card-type memories (e.g., an SD card, an XD memory, etc.), Random Access Memory (RAM), Static Random Access Memory (SRAM), Read-Only Memory (ROM), Electrically Erasable Programmable Read-Only Memory (EEPROM), Programmable Read-Only Memory (PROM) magnetic memory, a magnetic disc, and an optical disc. The device 100 may operate web storage or a cloud server that performs a storing function of the memory 170 via the Internet.

The programs stored in the memory 170 may be classified into a plurality of modules according to their functions, for example, into a user interface (Ul) module 171, a touch screen module 172, a content reproduction module 173, a context analysis module 174, a recommendation item managing module 174, etc.

The UI module 171 may provide a UI or GUI which are specialized according to applications. The touch screen module 172 may detect a user touch gesture on the touch screen and may transmit information regarding the touch gesture to the control unit 160. The touch screen module 172 may be configured as a separate controller (hardware).

Various sensors may be arranged in or near the touch screen so as to detect a touch or a proximate touch on the touch sensor. An example of the sensor to detect the touch on the touch screen may be a tactile sensor. The tactile sensor detects a contact of a specific object at least as sensitively as a person can detect. The tactile sensor may detect various types of information such as the roughness of a contact surface, the hardness of the contact object, the temperature of a contact point, or the like.

The touch gesture of the user may include a tap gesture, a touch & hold gesture, a double tap gesture, a drag gesture, a panning gesture, a flick gesture, a drag & drop gesture, or the like.

"Tapping" is a user's motion of touching a screen by using a finger or a touch tool (such as an electronic pen or a stylus) and then instantly lifting the finger or touch tool from the screen without moving the finger or touch tool.

"Touching & holding" is a user's motion of touching a screen by using a finger or a touch tool (such as an electronic pen or a stylus) and then maintaining the above touching motion over a critical time (e.g., 2 seconds), after touching the screen. For example, a time difference between a touch-in time and a touch-out time is greater than or equal to the critical time, for example, 2 seconds. When a touch input lasts more than the critical time, a feedback signal may be provided in a visual, acoustic, or tactile manner in order to inform the user whether the touch input is tapping or touching & holding. The critical time may vary according to embodiments.

"Double tapping" is a user's motion of touching the screen twice by using the finger or touch tool (such as an electronic pen or a stylus).

"Dragging" is a user's motion of touching the screen by using the finger or touch tool and moving the finger or touch tool to another position on the screen while keeping the touching motion. The dragging motion may enable the moving or panning motion of an object.

"Panning" is a user's motion of performing a dragging motion without selecting an object. Since no object is selected in the panning motion, no object is moved in a page but the page itself is moved on the screen or a group of objects may be moved within a page.

"Flicking" is a user's motion of performing a dragging motion over a critical speed, for example, 100 pixel/s, by using the finger or touch tool. The dragging (panning) motion or the flicking motion may be distinguished based on whether the moving speed of the finger or touch tool is over the critical speed, for example, 100 pixel/s, or not.

"Dragging & Dropping" is a user's motion of dragging an object to a predetermined position on the screen by using the finger or touch tool and then dropping the object at that position.

"Pinching" is a user's motion of moving two fingers touching the screen in opposite directions. The pinching motion is a gesture to magnify (open pinch) or contract (close pinch) an object or a page. A magnification value or a contraction value is determined according to the distance between the two fingers.

"Swiping" is a user's motion of touching an object on the screen by using the finger or touch tool and simultaneously moving the object horizontally or vertically by a predetermined distance. A swiping motion in a diagonal direction may not be recognized as a swiping event.

The memory 170 may include a voice recognition module (not shown) that recognizes a voice of the user by using a voice recognition engine and transmits the recognized voice to the control unit 160.

The content reproduction module 173 may reproduce predetermined content.

The context analysis module 174 may analyze a context, based on the event information collected by the sensing unit 120. For example, the context analysis module 174 may analyze environmental information of the device 100, user state information, state information of the device, etc.

The recommendation item managing module 175 may manage recommendation items received from the server 200.

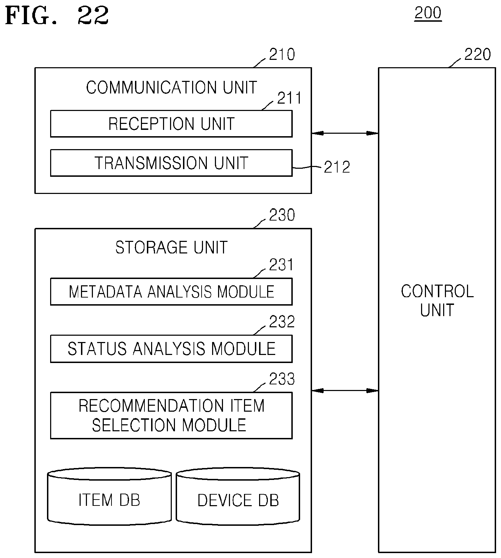

FIG. 22 is a block diagram of the server 200 according to an exemplary embodiment.

Referring to FIG. 22, the server 200 according to an exemplary embodiment may include a communication unit 210 (e.g., a communicator, etc.), a control unit 220 (e.g., a controller, etc.), and a storage unit 230 (e.g., a storage, etc.). However, these elements are not all essential. The server 200 may be implemented with more or less elements than the elements of FIG. 22.

The above elements will now be described below.

The communication unit 210 may include one or more elements for allowing communication between the server 200 and the device 100. The communication unit 210 may include a reception unit 211 (e.g., a receiver, etc.) and a transmission unit 212 (e.g., a transmitter, etc.).

The reception unit 211 may receive information regarding a type of the device 100 and a request for recommendation items that are to be displayed on a recommendation panel of the device 100 from the device 100. For example, the reception unit 211 may receive context information including at least one of position information of the device 100, use state information, information regarding an environment within a predetermined radius from the device 100, time information, and user schedule information from the device 100.

The reception unit 211 may receive recommendation condition information input by a user from the device 100. The recommendation condition information according to an exemplary embodiment may include user's feelings, a position of the user, weather, a recommendation item use purpose, a reproduction time length, types of items, etc., but is not limited thereto.

The reception unit 211 may receive information regarding items used in a plurality of devices of the user from each of the plurality of devices of the user. In this regard, the reception unit 211 may receive information regarding at least one item (for example, content, applications, service, etc.) registered in an OS scheduler from each of the plurality of devices at a predetermined interval. When use state changes of the plurality of devices of the user or use state changes of the items are detected, the reception unit 211 may receive information regarding the at least one item registered in the OS scheduler of the plurality of devices of the user.

For example, information regarding items may include at least one of item names, item types (for example, a moving image, a still image, a web page, etc.) an item collection time, application information related to items, item components, environment information (for example, weather, temperature, moisture, etc.) in relation to when items are collected, item collection paths, information regarding a device that collects items (for example, device type information, device identification information, etc.), use state information in relation to when items are collected, etc., but is not limited thereto.

The transmission unit 212 may transmit at least one recommendation item to the device 100. The transmission unit 212 may request information regarding at least one item that is being used in the plurality of devices of the user from each of the plurality of devices of the user at a predetermined interval.

The control unit 220 may generally control all operations of the server 200. The control unit 220 according to an exemplary embodiment may execute at least one program stored in the storage unit 230 and accordingly may select recommendation items that are to be displayed on the recommendation panel of the device 100. The control unit 220 may also execute the at least one program stored in the storage unit 230 and accordingly may analyze information regarding items received from the device 100.

The storage unit 230 may store a program to process and to control the control unit 220, or may store a plurality of pieces of data (e.g., items collected from devices, information regarding items, information regarding recommendation items, etc.) that are input/output.

The programs stored in the storage unit 230 may be classified into a plurality of modules according to their functions, for example, into a metadata analysis module 231, a context analysis module 232, a recommendation item selection module 233, etc.

The metadata analysis module 231 may analyze information regarding items received in the form of metadata from the plurality of devices of the user. In this regard, the information regarding the items may include basic attribute information and context information. The basic attribute information which is information regarding item attributes may include item names, item types, item genre, item reproduction lengths, item thumbnail images, item link information, etc., but is not limited thereto.

The context information which is information regarding a status when the device 100 collects items may include weather, temperature, a position, a user status, user's feelings, collection paths, identification information of the device 100 that collects items, information regarding a type of the device 100, etc., but is not limited thereto.

The metadata analysis module 231 may analyze the information (or an item DB) regarding items collected from the plurality of devices of the user and may obtain item use pattern information of each device, item use pattern information of each position, item use pattern information of each user status (or feelings), item use pattern information of each weather, etc.

The context analysis module 232 may analyze a context, based on event information received from the device 100. According to an exemplary embodiment, the context analysis module 232 may analyze the event information collected by the device 100 based on ontology. For example, the context analysis module 232 may analyze context (for example, a use state, user's feelings, weather, a season, a place, a schedule, etc.) of the device 100 at the time when recommendation items are requested.

The recommendation item selection module 233 may select at least one recommendation item from among items previously used in the plurality of devices of the user based on the type of the device 100. For example, the recommendation item selection module 233 may select at least one recommendation item based on the item use pattern information of the device 100. The recommendation item selection module 233 may select at least one recommendation item based on at least one of hardware information and software information of the device 100.

The recommendation item selection module 233 according to an exemplary embodiment may select at least one recommendation item in further consideration of time information when the device 100 requests recommendation items, position information of the device 100, user state information, and recommendation condition information.

According to an exemplary embodiment, recommendation items according to a type of a device may be provided by analyzing item use pattern information of a user for each device.

The device 100 and the server 200 according to an exemplary embodiment may recommend at least one item to the user from among previously used items by analyzing information regarding various items that were used in a plurality of devices of the user.

According to an exemplary embodiment, when a user input that requests a recommendation panel is received, the device 100 may provide the recommendation panel according to the user input while transmitting recommendation item request information including at least one of information regarding the device 100 and context information to the server 200.

One or more exemplary embodiments may also be embodied as programmed commands to be executed in various computer means, and then may be recorded to a computer-readable recording medium. The computer-readable recording medium may include one or more of the programmed commands, data files, data structures, or the like. The programmed commands recorded to the computer-readable recording medium may be particularly designed or configured for one or more exemplary embodiments. Examples of the computer-readable recording medium include magnetic media including hard disks, magnetic tapes, and floppy disks, optical media including CD-ROMs and DVDs, magneto-optical media including floptical disks, and a hardware apparatus designed to store and execute the programmed commands in ROM, RAM, a flash memory, and the like. Examples of the programmed commands include not only machine codes generated by a compiler but also include great codes to be executed in a computer by using an interpreter. The hardware apparatus may be configured to function as one or more software modules so as to perform operations of one or more exemplary embodiments.

It should be understood that the exemplary embodiments described herein should be considered in a descriptive sense only and not for purposes of limitation. Descriptions of features or aspects within each embodiment should typically be considered as available for other similar features or aspects in other embodiments.

While one or more exemplary embodiments have been described with reference to the figures, it will be understood by those of ordinary skill in the art that various changes in form and details may be made therein without departing from the scope of the inventive concept as defined by the following claims.

It will be appreciated that embodiments can be realized in the form of hardware, software or a combination of hardware and software. Any such software may be stored in the form of volatile or non-volatile storage, for example a storage device like a ROM, whether erasable or rewritable or not, or in the form of memory, for example RAM, memory chips, device or integrated circuits or on an optically or magnetically readable medium, for example a CD, DVD, magnetic disk or magnetic tape or the like. It will be appreciated that the storage devices and storage media are embodiments of machine-readable storage that are suitable for storing a program or programs comprising instructions that, when executed, implement certain embodiments of the present disclosure.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

## Claims

1. A method of providing information regarding a recommended content item to at least one device among a plurality of devices associated with a user account, by a server, the method comprising:
storing content data corresponding to a plurality of content items in a content database, the content data comprising:
content type information corresponding to the plurality of content items,
title information corresponding to the plurality of content items, and
genre information corresponding to the plurality of content items,
receiving user history information corresponding to a plurality of previously-viewed content items among the plurality of content items from the plurality of devices associated with the user account (S340, S440, S540), the user history information comprising:
viewing time information corresponding to the time at which the plurality of previously-viewed content items was viewed,
viewing device information corresponding to the device upon which the plurality of previously-viewed content items was viewed, and
reproduction duration information corresponding to the duration of the plurality of previously-viewed content items;
analyzing the user history information by the server (S360, S460, S560);
receiving a request from at least one device among the plurality of devices (S1220);
selecting at least one content item which is expected to be of interest to a user among the plurality of content items, as the recommended content item, based on the analysed user history information and context information including a recommendation item request time and device information of the at least one device from which the request is received (S1240); and
transmitting information regarding the recommended content item to the at least one device to display the information regarding the recommended content item on the at least one device (S1250),
wherein the recommended content item comprises a video, and
wherein the information regarding the recommended content item includes a thumbnail image representing the recommended content item, the thumbnail image being based on the user history information.

2. The method of claim 1, wherein the reproduction duration information indicates how long a previously-viewed content item from among the plurality of previously-viewed content items was watched.

3. The method of claim 1, wherein the information of the at least one device indicates a supported display resolution of the at least one device.

4. The method of claim 1, wherein the information regarding the recommended content item includes an image corresponding to the recommended content item, the image being based on the at least one device.

5. The method of claim 1, wherein the information regarding the recommended content item indicates a relative position at which the recommended content item is to be displayed with respect to other recommended content items in a row.

6. The method of claim 5, wherein the relative position is determined based on popularity.

7. The method of claim 1, wherein the viewing time information indicates a time of day at which at least one of the previously-viewed content items was viewed by the user account.

8. The method of claim 1, wherein the information of the at least one device includes a location of the at least one device when the request is sent by the at least one device.

9. The method of claim 1, wherein the user history information comprises information corresponding to a user interaction with at least one from among the previously-viewed content items, and
wherein the recommended content item is selected based on the user interaction.

10. The method of claim 1, further comprising:
receiving feedback information corresponding to a user interaction with the recommended content item;
updating the user history information based on the feedback information;
selecting a new recommended content item based on the updated user history information; and
transmitting information regarding the new recommended content item to the at least one device.

11. An apparatus for providing information regarding a recommended content item to at least one device (100) among a plurality of devices associated with a user account, by a server (200), the apparatus comprising:
a storage configured to store content data corresponding to a plurality of content items in a content database, the content data comprising:
content type information corresponding to the plurality of content items,
title information corresponding to the plurality of content items, and
genre information corresponding to the plurality of content items;
a communication interface configured to communicate with the plurality of devices; and
at least one processor configured to:
receive user history information corresponding to a plurality of previously-viewed content items among the plurality of content items from the plurality of devices associated with the user account, the user history information comprising:
viewing time information corresponding to the time at which the plurality of previously-viewed content items was viewed,
viewing device information corresponding to the device upon which the plurality of previously-viewed content items was viewed, and
reproduction duration information corresponding to the duration of the plurality of previously-viewed content items;
analyze the user history information by the server;
receive a request from at least one device among the plurality of devices;
select at least one content item which is expected to be of interest to a user among the plurality of content items, as the recommended content item, based on the analysed user history information and context information including a recommendation item request time and device information of the at least one device from which the request is received; and
transmit information regarding the recommended content item to the at least one device to display the information regarding the recommended content item on the at least one device,
wherein the recommended content item comprises a video, and
wherein the information regarding the recommended content item includes a thumbnail image representing the recommended content item, the thumbnail image being based on the user history information.

12. The apparatus of claim 11, wherein the user history information comprises information corresponding to a user interaction with at least one from among the previously-viewed content items, and
wherein the recommended content item is selected based on the user interaction.

13. The apparatus of claim 11, wherein the at least one processor is further configured to:
receive feedback information corresponding to a user interaction with the recommended content item;
update the user history information based on the feedback information;
select a new recommended content item based on the updated user history information; and
transmit information regarding the new recommended content item to the at least one device.

14. A non-transitory computer-readable storage medium storing a computer program for executing operations for providing information regarding a recommended content item to at least one device among a plurality of devices associated with a user account, by a server, the operations comprising:
storing content data corresponding to a plurality of content items in a content database, the content data comprising:
content type information corresponding to the plurality of content items,
title information corresponding to the plurality of content items, and
genre information corresponding to the plurality of content items,
receiving user history information corresponding to a plurality of previously-viewed content items among the plurality of content items from the plurality of devices associated with the user account, the user history information comprising:
viewing time information corresponding to the time at which the plurality of previously-viewed content items was viewed,
viewing device information corresponding to the device upon which the plurality of previously-viewed content items, and
reproduction duration information corresponding to the duration of the plurality of previously-viewed content items;
analyzing the user history information by the server;
receiving a request from at least one device among the plurality of devices;
selecting at least one content item which is expected to be of interest to a user among the plurality of content items, as the recommended content item, based on the analysed user history information and context information including a recommendation item request time and device information of the at least one device from which the request is received; and
transmitting information regarding the recommended content item to the at least one device to display the information regarding the recommended content item on the at least one device,
wherein the recommended content item comprises a video, and
wherein the information regarding the recommended content item includes a thumbnail image representing the recommended content item, the thumbnail image being based on the user history information.

## Patentansprüche

1. Verfahren zum Bereitstellen von Informationen bezüglich eines empfohlenen Inhaltselements für mindestens eine Vorrichtung unter einer Vielzahl von Vorrichtungen, die mit einem Benutzerkonto verknüpft sind, durch einen Server, wobei das Verfahren umfasst:
Speichern von Inhaltsdaten, die einer Vielzahl von Inhaltselementen in einer Inhaltsdatenbank entsprechen, wobei die Inhaltsdaten umfassen:
Inhaltstypinformationen, die der Vielzahl von Inhaltselementen entsprechen, Titelinformationen, die der Vielzahl von Inhaltselementen entsprechen, und
Genreinformationen, die der Vielzahl von Inhaltselementen entsprechen,
Empfangen von Benutzerverlaufsinformationen, die einer Vielzahl von zuvor angesehenen Inhaltselementen unter der Vielzahl von Inhaltselementen entsprechen, von der Vielzahl von Vorrichtungen, die mit dem Benutzerkonto (S340, S440, S540) verknüpft sind, wobei die Benutzerverlaufsinformationen umfassen:
Ansehzeitinformationen, die der Zeit entsprechen, zu der die Vielzahl von zuvor angesehenen Inhaltselementen angesehen wurde,
Ansehvorrichtungsinformationen, die der Vorrichtung entsprechen, auf der die Vielzahl von zuvor angesehenen Inhaltselementen angesehen wurde, und
Wiedergabedauerinformationen, die der Dauer der Vielzahl von zuvor angesehenen Inhaltselementen entsprechen;
Analysieren der Benutzerverlaufsinformationen durch den Server (S360, S460, S560);
Empfangen einer Anfrage von mindestens einer Vorrichtung aus der Vielzahl von Vorrichtungen (S1220);
Auswählen mindestens eines Inhaltselements, von dem erwartet wird, dass es für einen Benutzer von Interesse ist, aus der Vielzahl von Inhaltselementen als das empfohlene Inhaltselement, basierend auf den analysierten Benutzerverlaufsinformationen und Kontextinformationen, die eine Empfehlungselement-Anfragezeit und Vorrichtungsinformationen der mindestens einen Vorrichtung, von der die Anfrage empfangen (S1240) wird, enthalten; und
Übertragen von Informationen bezüglich des empfohlenen Inhaltselements an die mindestens eine Vorrichtung, um die Informationen bezüglich des empfohlenen Inhaltselements auf der mindestens einen Vorrichtung (S1250) anzuzeigen,
wobei das empfohlene Inhaltselement ein Video umfasst, und
wobei die Informationen bezüglich des empfohlenen Inhaltselements ein Miniaturbild enthalten, das das empfohlene Inhaltselement darstellt, wobei das Miniaturbild auf den Benutzerverlaufsinformationen basiert.

2. Verfahren nach Anspruch 1, wobei die Wiedergabedauerinformationen angeben, wie lange ein zuvor angesehenes Inhaltselement aus der Vielzahl von zuvor angesehenen Inhaltselementen betrachtet wurde.

3. Verfahren nach Anspruch 1, wobei die Informationen der mindestens einen Vorrichtung eine unterstützte Anzeigeauflösung der mindestens einen Vorrichtung angeben.

4. Verfahren nach Anspruch 1, wobei die Informationen bezüglich des empfohlenen Inhaltselements ein Bild enthalten, das dem empfohlenen Inhaltselement entspricht, wobei das Bild auf der mindestens einen Vorrichtung basiert.

5. Verfahren nach Anspruch 1, wobei die Informationen bezüglich des empfohlenen Inhaltselements eine relative Position angeben, an der das empfohlene Inhaltselement in Bezug auf andere empfohlene Inhaltselemente in einer Reihe anzuzeigen ist.

6. Verfahren nach Anspruch 5, wobei die relative Position basierend auf Beliebtheit bestimmt wird.

7. Verfahren nach Anspruch 1, wobei die Ansehzeitinformationen eine Tageszeit angeben, zu der mindestens eines der zuvor angesehenen Inhaltselemente von dem Benutzerkonto angesehen wurde.

8. Verfahren nach Anspruch 1, wobei die Informationen der mindestens einen Vorrichtung einen Standort der mindestens einen Vorrichtung enthalten, wenn die Anfrage von der mindestens einen Vorrichtung gesendet wird.

9. Verfahren nach Anspruch 1, wobei die Benutzerverlaufsinformationen Informationen umfassen, die einer Benutzerinteraktion mit mindestens einem unter den zuvor angesehenen Inhaltselementen entsprechen, und wobei das empfohlene Inhaltselement basierend auf der Benutzerinteraktion ausgewählt wird.

10. Verfahren nach Anspruch 1, ferner umfassend:
Empfangen von Rückmeldungsinformationen, die einer Benutzerinteraktion mit dem empfohlenen Inhaltselement entsprechen;
Aktualisieren der Benutzerverlaufsinformationen basierend auf den Rückmeldungsinformationen;
Auswählen eines neuen empfohlenen Inhaltselements basierend auf den aktualisierten Benutzerverlaufsinformationen; und
Übertragen von Informationen bezüglich des neuen empfohlenen Inhaltselements an die mindestens eine Vorrichtung.

11. Einrichtung zum Bereitstellen von Informationen bezüglich eines empfohlenen Inhaltselements für mindestens eine Vorrichtung (100) unter einer Vielzahl von Vorrichtungen, die mit einem Benutzerkonto verknüpft sind, durch einen Server (200), wobei die Einrichtung umfasst:
einen Speicher, der dazu konfiguriert ist, Inhaltsdaten, die einer Vielzahl von Inhaltselementen in einer Inhaltsdatenbank entsprechen, zu speichern, wobei die Inhaltsdaten umfassen:
Inhaltstypinformationen, die der Vielzahl von Inhaltselementen entsprechen, Titelinformationen, die der Vielzahl von Inhaltselementen entsprechen, und
Genreinformationen, die der Vielzahl von Inhaltselementen entsprechen;
eine Kommunikationsschnittstelle, die dazu konfiguriert ist, mit der Vielzahl von Vorrichtungen zu kommunizieren; und
mindestens einen Prozessor, der dazu konfiguriert ist:
Benutzerverlaufsinformationen, die einer Vielzahl von zuvor angesehenen Inhaltselementen aus der Vielzahl von Inhaltselementen entsprechen, von der Vielzahl von Vorrichtungen zu empfangen, die mit dem Benutzerkonto verknüpft sind, wobei die Benutzerverlaufsinformationen umfassen:
Ansehzeitinformationen, die der Zeit entsprechen, zu der die Vielzahl von zuvor angesehenen Inhaltselementen angesehen wurde,
Ansehvorrichtungsinformationen, die der Vorrichtung entsprechen, auf der die Vielzahl von zuvor angesehenen Inhaltselementen angesehen wurde, und
Wiedergabedauerinformationen, die der Dauer der Vielzahl von zuvor angesehenen Inhaltselementen entsprechen;
die Benutzerverlaufsinformationen durch den Server zu analysieren;
eine Anfrage von mindestens einer Vorrichtung von der Vielzahl von Vorrichtungen zu empfangen;
mindestens ein Inhaltselement, von dem erwartet wird, dass es für einen Benutzer von Interesse ist, aus der Vielzahl von Inhaltselementen als das empfohlene Inhaltselement auszuwählen, basierend auf den analysierten Benutzerverlaufsinformationen und Kontextinformationen, die eine Empfehlungselement-Anfragezeit und Vorrichtungsinformationen der mindestens einen Vorrichtung, von der die Anfrage empfangen wird, enthalten; und
Informationen bezüglich des empfohlenen Inhaltselements an die mindestens eine Vorrichtung zu übertragen, um die Informationen bezüglich des empfohlenen Inhaltselements auf der mindestens einen Vorrichtung anzuzeigen,
wobei das empfohlene Inhaltselement ein Video umfasst, und
wobei die Informationen bezüglich des empfohlenen Inhaltselements ein Miniaturbild enthalten, das das empfohlene Inhaltselement darstellt, wobei das Miniaturbild auf den Benutzerverlaufsinformationen basiert.

12. Einrichtung nach Anspruch 11, wobei die Benutzerverlaufsinformationen Informationen umfassen, die einer Benutzerinteraktion mit mindestens einem unter den zuvor angesehenen Inhaltselementen entsprechen, und
wobei das empfohlene Inhaltselement basierend auf der Benutzerinteraktion ausgewählt wird.

13. Einrichtung nach Anspruch 11, wobei der mindestens eine Prozessor ferner dazu konfiguriert ist:
Rückmeldungsinformationen zu empfangen, die einer Benutzerinteraktion mit dem empfohlenen Inhaltselement entsprechen;
die Benutzerverlaufsinformationen basierend auf den Rückmeldungsinformationen zu aktualisieren;
ein neues empfohlenes Inhaltselement basierend auf den aktualisierten Benutzerverlaufsinformationen auszuwählen; und
Informationen bezüglich des neuen empfohlenen Inhaltselements an die mindestens eine Vorrichtung zu übertragen.

14. Nichtflüchtiges computerlesbares Speichermedium, das ein Computerprogramm zum Ausführen von Vorgängen zum Bereitstellen von Informationen bezüglich eines empfohlenen Inhaltselements für mindestens eine Vorrichtung unter einer Vielzahl von Vorrichtungen, die mit einem Benutzerkonto verknüpft sind, durch einen Server speichert, wobei die Vorgänge umfassen:
Speichern von Inhaltsdaten, die einer Vielzahl von Inhaltselementen in einer Inhaltsdatenbank entsprechen, wobei die Inhaltsdaten umfassen:
Inhaltstypinformationen, die der Vielzahl von Inhaltselementen entsprechen, Titelinformationen, die der Vielzahl von Inhaltselementen entsprechen, und
Genreinformationen, die der Vielzahl von Inhaltselementen entsprechen,
Empfangen von Benutzerverlaufsinformationen, die einer Vielzahl von zuvor angesehenen Inhaltselementen unter der Vielzahl von Inhaltselementen entsprechen, von der Vielzahl von Vorrichtungen, die mit dem Benutzerkonto verknüpft sind, wobei die Benutzerverlaufsinformationen umfassen:
Ansehzeitinformationen, die der Zeit entsprechen, zu der die Vielzahl von zuvor angesehenen Inhaltselementen angesehen wurde,
Ansehvorrichtungsinformationen, die der Vorrichtung entsprechen, auf der die Vielzahl von zuvor angesehenen Inhaltselementen, und
Wiedergabedauerinformationen, die der Dauer der Vielzahl von zuvor angesehenen Inhaltselementen entsprechen;
Analysieren der Benutzerverlaufsinformationen durch den Server;
Empfangen einer Anfrage von mindestens einer Vorrichtung aus der Vielzahl von Vorrichtungen;
Auswählen mindestens eines Inhaltselements, von dem erwartet wird, dass es für einen Benutzer von Interesse ist, aus der Vielzahl von Inhaltselementen als das empfohlene Inhaltselement, basierend auf den analysierten Benutzerverlaufsinformationen und Kontextinformationen, die eine Empfehlungselement-Anfragezeit und Vorrichtungsinformationen der mindestens einen Vorrichtung, von der die Anfrage empfangen wird, enthalten; und
Übertragen von Informationen bezüglich des empfohlenen Inhaltselements an die mindestens eine Vorrichtung, um die Informationen bezüglich des empfohlenen Inhaltselements auf der mindestens einen Vorrichtung anzuzeigen,
wobei das empfohlene Inhaltselement ein Video umfasst, und
wobei die Informationen bezüglich des empfohlenen Inhaltselements ein Miniaturbild enthalten, das das empfohlene Inhaltselement darstellt, wobei das Miniaturbild auf den Benutzerverlaufsinformationen basiert.

## Revendications

1. Procédé de fourniture d'informations concernant un article de contenu recommandé à au moins un dispositif parmi une pluralité de dispositifs associés à un compte d'utilisateur, par un serveur, le procédé comprenant :
le stockage de données de contenu correspondant à une pluralité d'articles de contenu dans une base de données de contenu, les données de contenu comprenant :
des informations de type de contenu correspondant à la pluralité d'articles de contenu, des informations de titre correspondant à la pluralité d'articles de contenu, et des informations
de genre correspondant à la pluralité d'articles de contenu,
la réception des informations d'historique d'utilisateur correspondant à une pluralité d'articles de contenu précédemment visualisés parmi la pluralité d'articles de contenu en provenance de la pluralité de dispositifs associés au compte d'utilisateur (S340, S440, S540), les informations d'historique d'utilisateur comprenant :
des informations d'heure de visualisation correspondant à l'heure à laquelle la pluralité d'articles de contenu précédemment visualisés ont été visualisés,
des informations de dispositif de visualisation correspondant au dispositif sur lequel la pluralité d'articles de contenu précédemment visualisés ont été visualisés, et
des informations de durée de reproduction correspondant à la durée de la pluralité d'articles de contenu précédemment visualisés ;
l'analyse des informations d'historique d'utilisateur par le serveur (S360, S460, S560) ;
la réception d'une demande en provenance d'au moins un dispositif parmi la pluralité de dispositifs (S1220) ;
la sélection d'au moins un article de contenu qui devrait intéresser un utilisateur parmi la pluralité d'articles de contenu, en tant qu'article de contenu recommandé, sur la base des informations d'historique d'utilisateur et informations de contexte analysées comprenant une heure de demande d'article de recommandation et des informations de dispositif du au moins un dispositif en provenance duquel la demande est reçue (S 1240) ; et
la transmission des informations concernant l'article de contenu recommandé à l'au moins un dispositif pour afficher les informations concernant l'article de contenu recommandé sur le au moins un dispositif (S1250),
ledit article de contenu recommandé comprenant une vidéo, et lesdites informations concernant l'article de contenu recommandé comprenant une image miniature représentant l'article de contenu recommandé, l'image miniature étant basée sur les informations d'historique d'utilisateur.

2. Procédé selon la revendication 1, lesdites informations de durée de reproduction indiquant combien de temps un article de contenu précédemment visualisé parmi la pluralité d'articles de contenu précédemment visualisés a été regardé.

3. Procédé selon la revendication 1, lesdites informations du au moins un dispositif indiquant une résolution d'affichage prise en charge du au moins un dispositif.

4. Procédé selon la revendication 1, lesdites informations concernant l'article de contenu recommandé comprenant une image correspondant à l'article de contenu recommandé, l'image étant basée sur le au moins un dispositif.

5. Procédé selon la revendication 1, lesdites informations concernant l'article de contenu recommandé indiquant une position relative au niveau de laquelle l'article de contenu recommandé doit être affiché par rapport aux autres articles de contenu recommandés dans une rangée.

6. Procédé selon la revendication 5, ladite position relative étant déterminée sur la base de la popularité.

7. Procédé selon la revendication 1, lesdites informations d'heure de visualisation indiquant une heure du jour à laquelle au moins l'un des articles de contenu précédemment visualisés a été visualisé par le compte d'utilisateur.

8. Procédé selon la revendication 1, lesdites informations du au moins un dispositif comprenant un emplacement du au moins un dispositif lorsque la demande est envoyée par le au moins un dispositif.

9. Procédé selon la revendication 1, lesdites informations d'historique d'utilisateur comprenant des informations correspondant à une interaction d'utilisateur avec au moins un parmi les articles de contenu précédemment visualisés, et
ledit article de contenu recommandé étant sélectionné sur la base de l'interaction d'utilisateur.

10. Procédé selon la revendication 1, comprenant en outre :
la réception des informations de rétroaction correspondant à une interaction d'utilisateur avec l'article de contenu recommandé ;
la mise à jour des informations d'historique d'utilisateur sur la base des informations de rétroaction ;
la sélection d'un nouvel article de contenu recommandé sur la base des informations d'historique d'utilisateur mises à jour ; et
la transmission des informations concernant le nouvel article de contenu recommandé à l'au moins un dispositif.

11. Appareil destiné à fournir des informations concernant un article de contenu recommandé à au moins un dispositif (100) parmi une pluralité de dispositifs associés à un compte d'utilisateur, par un serveur (200), l'appareil comprenant :
un dispositif de stockage configuré pour stocker des données de contenu correspondant à une pluralité d'articles de contenu dans une base de données de contenu, les données de contenu comprenant :
des informations de type de contenu correspondant à la pluralité d'articles de contenu, des informations de titre correspondant à la pluralité d'articles de contenu et des informations de genre correspondant à la pluralité d'articles de contenu ;
une interface de communication configurée pour communiquer avec la pluralité de dispositifs ; et
au moins un processeur configuré pour :
recevoir des informations d'historique d'utilisateur correspondant à une pluralité d'articles de contenu précédemment visualisés parmi la pluralité d'articles de contenu provenant de la pluralité de dispositifs associés au compte d'utilisateur, les informations d'historique d'utilisateur comprenant :
des informations d'heure de visualisation correspondant à l'heure à laquelle la pluralité d'articles de contenu précédemment visualisés ont été visualisées,
des informations de dispositif de visualisation correspondant au dispositif sur lequel la pluralité d'articles de contenu précédemment visualisés ont été visualisées, et
des informations de durée de reproduction correspondant à la durée de la pluralité d'articles de contenu précédemment visualisés ;
analyser les informations d'historique d'utilisateur par le serveur ;
recevoir une demande en provenance d'au moins un dispositif parmi la pluralité de dispositifs ;
sélectionner au moins un article de contenu qui devrait intéresser un utilisateur parmi la pluralité d'articles de contenu, en tant qu'article de contenu recommandé, sur la base des informations d'historique d'utilisateur et informations de contexte analysées, comprenant une heure de demande d'article de recommandation et des informations de dispositif du au moins un dispositif en provenance duquel la demande est reçue ; et
transmettre des informations concernant l'article de contenu recommandé à l'au moins un dispositif pour afficher les informations concernant l'article de contenu recommandé sur le au moins un dispositif, ledit article de contenu recommandé comprenant une vidéo, et lesdites informations concernant l'article de contenu recommandé comprenant une image miniature représentant l'article de contenu recommandé, l'image miniature étant basée sur les informations d'historique d'utilisateur.

12. Appareil selon la revendication 11, lesdites informations d'historique d'utilisateur comprenant des informations correspondant à une interaction d'utilisateur avec au moins un parmi les articles de contenu précédemment visualisés, et
ledit article de contenu recommandé étant sélectionné sur la base de l'interaction d'utilisateur.

13. Appareil selon la revendication 11, ledit au moins un processeur étant en outre configuré pour :
recevoir des informations de rétroaction correspondant à une interaction d'utilisateur avec l'article de contenu recommandé ;
mettre à jour les informations d'historique d'utilisateur sur la base des informations de rétroaction ;
sélectionner un nouvel article de contenu recommandé sur la base des informations d'historique d'utilisateur mises à jour ; et
transmettre des informations concernant le nouvel article de contenu recommandé à l'au moins un dispositif.

14. Support de stockage lisible par ordinateur non transitoire stockant un programme informatique destiné à exécuter des opérations en vue de la fourniture d'informations concernant un article de contenu recommandé à au moins un dispositif parmi une pluralité de dispositifs associés à un compte d'utilisateur, par un serveur, les opérations comprenant :
le stockage de données de contenu correspondant à une pluralité d'articles de contenu dans une base de données de contenu, les données de contenu comprenant :
des informations de type de contenu correspondant à la pluralité d'articles de contenu,
des informations de titre correspondant à la pluralité d'articles de contenu, et
des informations de genre correspondant à la pluralité d'articles de contenu,
la réception d'informations d'historique d'utilisateur correspondant à une pluralité d'articles de contenu précédemment visualisés parmi la pluralité d'articles de contenu en provenance de la pluralité de dispositifs associés au compte d'utilisateur, les informations d'historique d'utilisateur comprenant :
des informations d'heure de visualisation correspondant à l'heure à laquelle la pluralité d'articles de contenu précédemment visualisés ont été visualisés,
des informations de dispositif de visualisation correspondant au dispositif sur lequel la pluralité d'articles de contenu précédemment visualisés, et
des informations de durée de reproduction correspondant à la durée de la pluralité d'articles de contenu précédemment visualisés ;
l'analyse des informations d'historique d'utilisateur par le serveur ;
la réception d'une demande en provenance d'au moins un dispositif parmi la pluralité de dispositifs ;
la sélection d'au moins un article de contenu qui devrait intéresser un utilisateur parmi la pluralité d'articles de contenu, en tant qu'article de contenu recommandé, sur la base des informations d'historique d'utilisateur et informations de contexte analysées comprenant une heure de demande d'article de recommandation et des informations de dispositif du au moins un dispositif en provenance duquel la demande est reçue ; et
la transmission des informations concernant l'article de contenu recommandé à l'au moins un dispositif pour afficher les informations concernant l'article de contenu recommandé sur le au moins un dispositif,
ledit article de contenu recommandé comprenant une vidéo, et
lesdites informations concernant l'article de contenu recommandé comprenant un image miniature représentant l'article de contenu recommandé, l'image miniature étant basée sur les informations d'historique d'utilisateur.
